# EUROPÄISCHE PATENTANMELDUNG

(11) **EP 4 645 753 A1**
(43) Veröffentlichungstag der Anmeldung: **05.11.2025**
(21) Anmeldenummer: 24174110.7
(22) Anmeldetag: 03.05.2024
(51) Int. Cl.: H04L 9/32, H04L 9/00

(54) **COMPUTERIMPLEMENTIERTES VERFAHREN UND SYSTEM ZUM HASHBASIERTEN SICHEREN ÜBERTRAGEN VON DATEN**

(71) Anmelder: Siemens Aktiengesellschaft, 80333 München (DE)
(72) Erfinder: Fischer, Kai, 85598 Baldham (DE); Piccoli, Alessandro, 80333 München (DE); Safieh, Malek, 81539 München (DE); Schneider, Daniel, 80796 München (DE)
(74) Vertreter: Siemens Patent Attorneys

(57) **Zusammenfassung**

Computerimplementiertes Verfahren und Übertragungssystem (1) zum hashbasierten sicheren Übertragen von Daten von einem Remote-System (2) zu einem Gerät (3), mit den Schritten: Bereitstellen (S1) mindestens eines hashbasierten Schlüsselpaares (sk i, pk i) durch eine Schlüsselbereitstellungseinheit(2A) des Remote-Systems (2), wobei das bereitgestellte hashbasierte Schlüsselpaar (sk i, pk i) einen nicht - öffentlichen kryptographischen Schlüssel (sk i) und einen zugehörigen öffentlichen kryptographischen Schlüssel (pk i) umfasst; Übermittelnen (S2) des öffentlichen kryptographischen Schlüssels (pk 1) des ersten von der Schlüsselbereitstellungseinheit (2A) bereitgestellten hashbasierten Schlüsselpaares (sk 1, pk 1) für das Gerät (3) in einer vertrauenswürdigen Umgebung ; Übertragen (S3) von Daten von dem Remote-System (2) zu dem Gerät (3), wobei die übertragenen Daten mit einem nicht - öffentlichen kryptographischen Schlüssel (sk i) signiert sind; und Akzeptieren (S4) der von dem Gerät (3) empfangenen signierten Daten als gültig, sofern die hashbasierte Signatur (Sig_sk i) der von dem Gerät (3) empfangenen mit dem nicht-öffentlichen kryptographischen Schlüssel (sk i) signierten Daten mittels eines eines auf Basis eines vorherigen öffentlichen kryptographischen Schlüssels (pk i-x mit 1 <= x < i) vertrauenswürdig erneuerten zugehörigen öffentlichen kryptographische Schlüssels (pk i) erfolgreich verifiziert wird.

## Beschreibung

Die Erfindung betrifft ein computerimplementiertes Verfahren und ein Übertragungssystem zum hashbasierten sicheren Übertragen von Daten von einem Remote-System zu einem Gerät und insbesondere ein hash-basiertes Einmalsignaturverfahren mit einem dynamischen und sicheren Schlüssel-Update kryptographischer Schlüssel.

Digitale Signaturen sind ein wichtiger Bestandteil der asymmetrischen Kryptographie, die zur Authentisierung und zum Integritätsschutz von Daten dienen. Für viele Anwendungen z.B. für Softwareupdates oder für einen sicheren Kommunikationsaufbau können digitale Signaturen verwendet werden.

Die Sicherheit herkömmlicher Signaturverfahren (oder allgemein bei der herkömmlichen asymmetrischen Kryptographie) wie Rivest-Shamir-Adleman (RSA), Elliptische Kurven ist auf sogenannte Trapdoor-Funktionen (Punktmultiplikation, oder Faktorisierung) angewiesen, die aktuell nicht in polynomieller Zeit gelöst bzw. angegriffen werden können.

Die Berechnung der Trapdoor-Funktion ist im Vergleich mit anderen Krypto-Operationen, z.B. Hashberechnungen oder die Berechnung von symmetrischen Krypto-Operationen, sehr aufwendig. Dadurch entsteht allgemein die Herausforderung, Funktionen der asymmetrischen Kryptographie insbesondere für ressourcenbeschränkte Geräte so weit wie möglich zu reduzieren oder durch effizientere zu ersetzen.

Als Kandidaten hierfür sind Hash-basierte Signaturen bekannt (z.B. XMSS oder LMS), die insbesondere im Kontext der Post-Quantum Kryptographie in den letzten Jahren an Bedeutung gewonnen haben. Hash-basierte Signaturen können effizient mit Hashberechnungen (z.B. SHA-2 oder SHA-3 usw.) erzeugt und verifiziert werden. Viele Geräte unterstützen bereits die Berechnung von Hashfunktionen. Teilweise verfügen Geräte sogar über einen Hardware-Beschleuniger für die Berechnung von Hashfunktionen. Jedoch haben Hash-basierte Signaturen mehrere Eigenschaften, die die praktische Anwendung einschränken. Die wichtigste davon ist, dass es sich um Einmalsignaturen (One-Time-Signature, OTS) handelt bzw. um private Schlüssel handelt, die nur ein einziges Mal in der gesamten Lebensdauer für die Erstellung einer Signatur verwendet werden dürfen. Sofern bereits verwendete private bzw. nicht - öffentliche kryptographische Schlüsseln zum Signieren von verschiedenen Daten wiederholt eingesetzt werden, wird ein Hash-basiertes Signaturverfahren unsicher.

XMSS und LMS verfolgen eine Baumstruktur (der sogenannte Merkle-Baum) zur Berechnung eines Hashwertes als Root-of-Trust (ROT), nämlich der sogenannte Root-Hash. Mithilfe dieser Baumstruktur kann man aus mehreren öffentlichen Schlüsseln einen Root-Hash berechnen, der für eine vertrauliche und erfolgreiche Verifizierung von mehreren (aber einer begrenzten Anzahl) Einmal-Signaturen dienen kann. Jedoch erfordert die Verwendung der Baumstruktur zusätzlichen Rechenaufwand für die involvierten Einheiten, d.h. den Ersteller und den Überprüfer einer Signatur. Je nach Implementierung und Variante des hashbasierten Signaturverfahrens kann die Berechnung eines Root-Hashs um einen Faktor von mehreren Hundert bis mehrere Hunderttausend komplexer als die Erzeugung oder Verifizierung einer Signatur mit demselben Verfahren sein. Somit wird der Ersteller einer Signatur am Anfang sehr lange mit der komplexen Schlüsselvorbereitung und Berechnung des Root-Hashs aufgehalten. Bekannt ist zudem, dass die sogenannte WOTS oder Winternitz-Kette in XMSS in der Realität ziemlich lang sind und mit dem Konzept von L-Trees aus dem XMSS-Standard mit geringer Logik Overhead verkürzt werden können.

Es ist daher eine Aufgabe der Erfindung ein computerimplementiertes Verfahren zum hashbasierten sicheren Übertragen von Daten zu schaffen, das es einem ressourcenbeschränkten Gerät erlaubt, Signaturen für eine sichere Datenübertragung effizient zu prüfen.

Diese Aufgabe wird erfindungsgemäß durch ein computerimplementiertes Verfahren zum hashbasierten sicheren Übertragen von Daten von einem Remote-System zu einem Gerät mit den im Patentanspruch 1 angegebenen Merkmalen gelöst.

Die Erfindung schafft gemäß einem ersten Aspekt ein computerimplementiertes Verfahren zum hashbasierten sicheren Übertragen von Daten von einem Remote-System zu einem Gerät mit den Schritten:
Bereitstellen mindestens eines hashbasierten Schlüsselpaares (sk i, pk i) durch eine Schlüsselbereitstellungseinheit des Remote-Systems, wobei das bereitgestellte hashbasierte Schlüsselpaar (sk i, pk i) einen nicht - öffentlichen kryptographischen Schlüssel (sk i) und einen zugehörigen öffentlichen kryptographischen Schlüssel (pk i) umfasst;
Übermitteln des öffentlichen kryptographischen Schlüssels (pk 1) des ersten erzeugten hashbasierten Schlüsselpaares (sk 1, pk 1) für das Gerät in einer vertrauenswürdigen Umgebung;
Übertragen von Daten von dem Remote-System zu dem Gerät, wobei die übertragenen Daten mit einem nicht-öffentlichen kryptographischen Schlüssel (sk i) signiert sind;
Akzeptieren der von dem Gerät empfangenen signierten Daten als gültig, sofern die hashbasierte Signatur (Sig_sk i) der von dem Gerät empfangenen mit dem nicht- öffentlichen kryptographischen Schlüssel (sk i) signierten Daten mittels eines auf Basis eines vorherigen öffentlichen kryptographischen Schlüssels (pk i-x mit 1<= x< i; 1 <= i <= n) vertrauenswürdig erneuerten zugehörigen öffentlichen kryptographischen Schlüssels (pk i) erfolgreich verifiziert wird (wobei n ist eine natürliche Zahl ist, x eine Variable ist und wobei i ein Index ist)
Das erste (Index i = 1) bereitgestellte kryptographische Schlüsselpaar (sk 1, pk 1) ist ein Schlüsselpaar, das in einer vertrauenswürdigen Umgebung (und somit später nicht veränderlichen Form) zwischen dem Remote-System und dem Gerät ausgetauscht wird. Dies stellt eine Voraussetzung für die Durchführung der weiteren Schritte des erfindungsgemäßen Verfahrens dar. Der erste private kryptographische Schlüssel sk 1 wird zur Signierung der Daten benutzt solange das erste Schlüsselpaar (pk 1, sk 1) gültig ist. Danach kann der zweite private kryptographische Schlüssel sk 2 zur Signierung benutzt werden, dann der dritte private kryptographische Schlüssel sk3 usw.

Das erfindungsgemäße Verfahren ermöglicht es, das ursprüngliche Schlüsselpaar (sk 1, pk 1) auch in einer nicht mehr vertrauenswürdigen Umgebung dennoch vertrauenswürdig zu erneuern bzw. upzudaten. Das ist relevant, weil das erfindungsgemäße Verfahren hashbasierte Einmalsignaturen verwendet. Das heißt ein privater kryptographischer Schlüssel sk darf nicht zum Signieren von unterschiedlichen Daten verwendet werden. Anders gesagt die verschiedenen Ausführungsformen des erfindungsgemäßen Verfahrens gestatten eine vertrauenswürdige Erneuerung von Schlüsselpaaren (sk i, pk i) mit index i, wobei i >= 2.

Bei einer möglichen Ausführungsform wird der bereitgestellte öffentliche kryptographische Schlüssel (pk 1) des ersten Schlüsselpaares (sk 1, pk 1) unverschlüsselt in einem integritätsgeschützten Speicher des Gerätes gespeichert.

Bei einer alternativen möglichen Ausführungsform wird der bereitgestellte öffentliche kryptographische Schlüssel (pk 1) des ersten Schlüsselpaares (sk 1, pk 1) verschlüsselt in einem Speicher des Gerätes gespeichert. Bei dieser Ausführungsform schickt das Remote-System den ersten bereitgestellten öffentlichen kryptographischen Schlüssel pk 1 verschlüsselt zu dem Gerät. Es handelt sich hier vorzugsweise um eine authentisierte Verschlüsselung, womit auch die Integrität geschützt wird. Der verschlüsselt übertragene erste öffentliche kryptographische Schlüssel pk 1 wird auch verschlüsselt in dem Gerät gespeichert, bis das Remote-System einen Einmalschlüssel bzw. One Time Key (OTK) zu seiner Entschlüsselung bereitstellt.

Bei einer bevorzugten Ausführungsform wird zunächst der nicht- öffentliche bzw. private kryptographische Schlüssel sk erzeugt, beispielsweise mit einem kryptografischen Zufallszahlgenerator. Der öffentliche kryptographischen Schlüssel pk wird anschließend aus dem erzeugten nicht-öffentlichen kryptographischen Schlüssel sk mithilfe von Hashoperationen berechnet.

Der Schlüsselpaargenerator bzw. die Schlüsselbereitstellungseinheit bietet mehr als eine bloße Generierung und Berechnung von kryptographischen Schlüsseln. Der Schlüsselpaargenerator bzw. die Schlüsselbereitstellungseinheit speichert zudem den berechneten nicht öffentlichen kryptographischen Schlüssel sk derart, dass dessen Integrität und Vertraulichkeit geschützt sind.

Allgemein kann jede Einheit die Integrität von signierten Daten, die mit einem nicht-öffentlichen kryptographischen Schlüssel (sk i) signiert sind, mit dem dazugehörigen öffentlichen kryptographischen Schlüssel (pk i) prüfen. Das gilt nicht nur für ein Gerät, sondern auch für eine Vielzahl von Geräten bzw. für jede Einheit die über den öffentlichen kryptographischen Schlüssel (pk i) verfügt.

Die obigen Schritte können teilweise parallel bzw. überlappend ausgeführt werden.

Mit Hilfe des erfindungsgemäßen Verfahrens kann ein ressourcenbeschränktes Gerät Signaturen effizient prüfen.

Bei hashbasierte Signaturen handelt es sich um einmal verwendbare Signaturen. Das heißt der private bzw. nichtöffentliche Schlüssel sk kann nur einmal zum Signieren benutzt werden. Das erfindungsgemäße Verfahren bietet effiziente Möglichkeiten, wie die kryptographischen Schlüssel kontinuierlich und vertrauenswürdig erneuert (updated) werden können. Die Anwendung des Verfahrens fokussiert dabei auf ressourcenbeschränkte Geräte.

Ressourcenbeschränkte Geräte sind elektronische Geräte, die aufgrund begrenzter Hardware-Ressourcen wie Rechenleistung, Arbeitsspeicher, Speicherplatz oder Energie eingeschränkt sind. Diese Geräte haben typischerweise weniger Leistungsfähigkeit im Vergleich zu High-End-Computern und müssen daher effizient mit begrenzten Ressourcen umgehen. Das Gerät kann ein Client, Slave, Empfänger oder je nach Anwendung auch anders genannt werden.

Die ressourcen-beschränkte Geräte des erfindungsgemäßen Übertragungssystems umfassen beispielsweise:
Embedded Systems: Kleine Computer, die in andere Geräte eingebettet sind, wie in Haushaltsgeräten, Autos, medizinischen Geräten oder industriellen Steuerungssystemen.

IoT-Geräte (Internet of Things): Sensoren, Aktuatoren und kleine Computer, die miteinander vernetzt sind, um Daten zu sammeln und Aktionen auszuführen.

Wearables: Kleine Geräte, die am Körper getragen werden, wie Smartwatches, Fitness-Tracker und intelligente Kleidung.

RFID-Geräte (Radio-Frequency Identification): Kleine, kostengünstige Geräte, die Daten drahtlos über kurze Distanzen übertragen, oft für Identifikations- und Logistikzwecke.

Smart Sensors: Kompakte Sensoren, die in verschiedenen Anwendungen eingesetzt werden, um Umgebungsdaten zu erfassen, beispielsweise in der Umweltüberwachung oder bei industriellen Prozessen.

Bei dem erfindungsgemäßen Verfahren werden hashbasierte Signaturen anstatt herkömmliche ressourcenintensiv erzeugte Signaturen verwendet.

Eine digitale hashbasierte Signatur (Sig) beruht auf einem kryptografischen Verfahren, das dazu dient, die Integrität und Authentizität von digitalen Daten zu gewährleisten.

Im Folgenden wird die Vorgehensweise beschrieben.

Daten-Hashing H: Zunächst wird ein kryptografischer Hashwert aus den zu signierenden Daten erzeugt. Ein Hashalgorithmus wie z.B. SHA-256 (Secure Hash Algorithm 256 Bit) wird verwendet, um eine feste Länge von Daten in einen eindeutigen Hashwert umzuwandeln.

Privater Schlüssel sk: Der Sender der Signatur verwendet einen privaten Schlüssel sk, welcher gehashed wird. Dieser private Schlüssel sk ist Teil eines asymmetrischen Schlüsselpaares (sk, pk), bei dem der öffentliche Schlüssel pk allgemein zugänglich ist, während der private Schlüssel sk geheim gehalten wird.

Digitale Signatur Sig: Die Signatur wird aus der Kombination von verschiedenen Hashwerten generiert. Der private kryptographische Schlüssel sk wird n-mal gehashed, um den öffentlichen kryptographischen Schlüssel pk zu generieren bzw. zu berechnen. Die Signatur Sig wird mit den zu signierenden Daten kombiniert und als Gesamtdatenpaket ausgegeben.

Verifizierung: Der öffentliche kryptographische Schlüssel pk wird nicht verwendet, um eine Signatur zu entschlüsseln. Bei hashbasierten Signaturen wird ausgehend von der Signatur, diese mehrmals gehashed, um einen kryptographischen Schlüssel pk' zu berechnen, welcher dann mit dem öffentlichen kryptographischen Schlüssel pk verglichen wird.

Die Verwendung einer digitalen hashbasierten Signatur (Sig) bietet für das erfindungsgemäße Übertragungssystem mehrere Sicherheitsmerkmale, darunter:
Integrität: Jede Änderung an den signierten Daten würde zu einer anderen Hashwertgenerierung führen und die Signatur ungültig machen.

Authentizität: Der private Schlüssel sk wird nur vom Absender bzw. dem Remote-System gehalten, und die Verwendung des privaten Schlüssels sk zum Signieren bestätigt die Herkunft der Daten.

Unabstreitbarkeit: Da nur der Besitzer des privaten Schlüssels sk die Signatur Sig erstellen kann, kann er die Autorenschaft der Daten nicht leugnen.

Die digitale Signaturen Sig können in vielen Anwendungsbereichen eingesetzt werden, um die Sicherheit und Integrität digitaler Informationen zu gewährleisten, wie beispielsweise bei elektronischen Transaktionen, E-Mails und Dokumenten.

Für das Kombinieren von mehreren öffentlichen kryptographischen Schlüsseln pk kann im Rahmen des erfindungsgemäßen Verfahrens bei einer möglichen Ausführungsform eine Baumstruktur, wie z.B. ein Merkle Tree, zur Berechnung eines einzigen öffentlichen Schlüssels (der sogenannte Root-Hash) verwendet werden. Dies kann in bestimmten Fällen die Komplexität reduzieren.

Bei einer mögliche Ausführungsform des computerimplementiertes Verfahren zum sicheren Übertragen von Daten von einem Remote-System zu einem Gerät wird der zum Verifizieren der hashbasierten Signatur (Sig_sk i) verwendete öffentliche kryptographische Schlüssel (pk i) nach seiner Verwendung erneuert, wobei er vorzugsweise durch den öffentlichen kryptographischen Schlüssel (pk i+1) des nächsten bereitgestellten Schlüsselpaares ersetzt wird.

Es erfolgt somit bei einer bevorzugten Ausführungsform des erfindungsgemäßen Verfahrens eine regelmäßige geschützte Aktualisierung des öffentlichen kryptographischen Schlüssels (Trust Anchor) für die Überprüfung von hashbasierten Signaturen.

Bei einer möglichen Ausführungsform des computerimplementiertes Verfahren zum sicheren Übertragen von Daten von einem Remote-System zu einem Gerät wird der öffentliche kryptographische Schlüssel (pk 1) des ersten (Index i=1) bereitgestellten hashbasierten Schlüsselpaares (sk 1, pk 1) in einer vertrauenswürdigen Umgebung in einem integritätsgeschützten veränderbaren Speicher des Gerätes abgelegt.

Bei einer möglichen Ausführungsform des computerimplementiertes Verfahren zum sicheren Übertragen von Daten von einem Remote-System zu einem Gerät weisen die von dem Remote-System zu dem Gerät signiert übertragenen Daten neben Nutzdaten einen öffentlichen kryptographischen Schlüssel (pk i) eines weiteren durch die Schlüsselbereitstellungseinheit des Remote-Systems bereitgestellten hashbasierten Schlüsselpaares (sk i, pk i) auf.

Bei einer möglichen Ausführungsform des computerimplementiertes Verfahren zum sicheren Übertragen von Daten von einem Remote-System zu einem Gerät wird der in dem integritätsgeschützten veränderbaren Speicher des Gerätes abgelegte öffentliche kryptographische Schlüssel des bereitgestellten hashbasierten Schlüsselpaares (nach seiner Verwendung und der erfolgreichen Verifizierung der hashbasierten Signatur zu seiner Aktualisierung durch den in den signiert übertragenen Daten enthaltenen öffentlichen kryptographischen Schlüssel (pk i) des weiteren erzeugten hashbasierten Schlüsselpaares (sk i, pk i) automatisch ersetzt.

Bei einer möglichen Ausführungsform des computerimplementiertes Verfahren zum sicheren Übertragen von Daten von einem Remote-System zu einem Gerät wird der öffentliche kryptographische Schlüssel (pk 1) des ersten (Index i = 1) bereitgestellten hashbasierten Schlüsselpaares (sk 1, pk 1) in einer vertrauenswürdigen Umgebung in einem integritätsgeschützten unveränderbaren Speicher des Gerätes gespeichert.

Diese Ausführungsform bzw. Variante wird vorzugsweise nur bei der der Übertragung des ersten öffentlichen kryptographischen Schlüssels pk 1 in einer vertrauenswürdigen Umgebung (z.B. während der Produktion des Gerätes) eingesetzt. Danach können die übrigen Varianten des erfindungsgemäßen Verfahrens eingesetzt werden.

Keine der bevorzugten Ausführungsformen des erfindungsgemäßen Verfahrens benötigt zwei Signaturen gleichzeitig. Außerdem wird die Anzahl der Schlüsselpaare kontinuierlich generiert und der entsprechende Index (Index=i) wird erhöht. Das erste (Index i=1) Schlüsselpaar (sk 1, pk 1) wird am Anfang generiert und in einer sicheren Umgebung ausgetauscht. Der Index i ist eine hochzählende Variable, wobei 1 < = i <= n ist und wobei n eine natürliche Zahl ist.

Bei einer Ausführungsform des erfindungsgemäßen Verfahrens wird mit jeder Signatur ein neues Schlüsselpaar (sk i, pk i) generiert und der neue öffentliche kryptographische Schlüssel pk_i wird an den Daten angehängt, mit dem privaten kryptographischen Schlüssel sk (i-1) des vorherigen Schlüsselpaares signiert und mitgeschickt.

Bei einer weiteren Ausführungsform des erfindungsgemäßen Verfahrens werden kontinuierlich immer mindestens zwei neue Schlüsselpaare generiert (sk i, pk i, sk (i+1), pk (i+1)), mit dem vorherigen nicht öffentlichen Schlüssel sk (i-1) signiert und in der Betriebsphase II an das Gerät geschickt.

Ein i-tes Schlüsselpaar (sk i, pk i), wird dabei zum Signieren und Überprüfen von den zunächst kommenden Daten benutzt. Ein anderes Schlüsselpaar, beispielsweise das nächste (i+1) -te Schlüsselpaar (sk-(i+1), pk-(i+1)) wird zum nächsten sicheren Schlüssel-Update, auf dieselbe Art und Weise - wie in der zweiten Variante beschrieben - benutzt. Beide Ausführungsformen fahren in dieser Weise fort bis das n-te Schlüsselpaar (sk n, pk n) erreicht wird.

Bei einer möglichen Ausführungsform des computerimplementiertes Verfahren zum sicheren Übertragen von Daten von einem Remote-System zu einem Gerät weist der zum Speichern des öffentlichen kryptographischen Schlüssels (pk 1) des ersten bereitgestellten hashbasierten Schlüsselpaares (sk 1, pk 1) verwendete integritätsgeschützte unveränderbare Speicher des Gerätes einen einmalig beschreibbaren ROM-Speicher oder einmalig programmierbare Sicherungselemente auf.

Bei einer möglichen Ausführungsform des computerimplementiertes Verfahren zum sicheren Übertragen von Daten von einem Remote-System zu einem Gerät übermittelt die Schlüsselbereitstellungseinheit des Remote-Systems mindestens zwei weitere hashbasierte öffentliche kryptographische Schlüssel von Schlüsselpaaren die signiert mit dem nicht - öffentlichen kryptographischen Schlüssel des von der Schlüsselbereitstellungseinheit zuvor bereitgestellten hashbasierten Schlüsselpaares von dem Remote-System an das Gerät übermittelt werden.

Bei einer möglichen Ausführungsform des computerimplementiertes Verfahren zum sicheren Übertragen von Daten von einem Remote-System zu einem Gerät werden die mit dem nicht-öffentlichen kryptographischen Schlüssel des von der Schlüsselbereitstellungseinheit des Remote-Systems bereitgestellten hashbasierten Schlüsselpaares signiert an das Gerät übermittelten weiteren hashbasierten öffentlichen kryptographischen Schlüssel zusammen mit der hashbasierten Signatur verarbeitet..

Bei einer möglichen Ausführungsform des computerimplementiertes Verfahren zum sicheren Übertragen von Daten von einem Remote-System zu einem Gerät wird eine hashbasierte Signatur von Daten, die von dem Remote-System an das Gerät mit einem nicht-öffentlichen kryptographischen Schlüssel eines weiteren hashbasierten Schlüsselpaares signiert übertragen werden, mittels des zuvor übermittelten zugehörigen öffentlichen kryptographischen Schlüssels des jeweiligen hashbasierten Schlüsselpaares verifiziert.

Bei einer möglichen Ausführungsform des computerimplementiertes Verfahren zum sicheren Übertragen von Daten von einem Remote-System zu einem Gerät wird die zusammen mit dem weiteren hashbasierten Schlüsselpaar zwischengespeicherte hashbasierte Signatur (Sig_sk i) mittels des vertrauenswürdig erneuerten zugehörigen öffentlichen kryptographischen Schlüssels (pk i) verifiziert.

Bei einer möglichen Ausführungsform des computerimplementiertes Verfahren zum sicheren Übertragen von Daten von einem Remote-System zu einem Gerät werden die von dem Gerät empfangenen Daten, die von dem Remote-System an das Gerät mit dem nicht-öffentlichen kryptographischen Schlüssel des weiteren hashbasierten Schlüsselpaares signiert übertragen werden, als gültig akzeptiert, falls die zugehörige hashbasierte Signatur mittels des zuvor vertrauenswürdig erneuerten zugehörigen öffentlichen kryptographische Schlüssels des jeweiligen hashbasierten Schlüsselpaares erfolgreich verifiziert wird und die zusammen mit dem weiteren hashbasierten Schlüsselpaar gespeicherte hashbasierte Signatur mittels des in dem integritätsgeschützten unveränderbaren Speicher des Gerätes gespeicherten öffentlichen kryptographischen Schlüssels erfolgreich verifiziert wird.

Bei einer möglichen Ausführungsform des computerimplementiertes Verfahren zum sicheren Übertragen von Daten von einem Remote-System zu einem Gerät wird der öffentliche kryptographische Schlüssel des von der Schlüsselbereitstellungseinheit des Remote-Systems bereitgestellten hashbasierten Schlüsselpaares durch eine Verschlüsselungseinheit des Remote-Systems mit einem kryptographischen Schlüssel (k), insbesondere mit einem einmalig verwendbaren kryptographischen Schlüssel bzw. One Time Key (otk), verschlüsselt.

Bei einer möglichen Ausführungsform des computerimplementiertes Verfahren zum sicheren Übertragen von Daten von einem Remote-System zu einem Gerät wird der durch die Verschlüsselungseinheit des Remote-Systems verschlüsselte bzw. encryptete öffentliche kryptographische Schlüssel (Encrypt (pk 1)) an das Gerät übertragen und in einem Speicher des Gerätes gespeichert.

Bei einer möglichen Ausführungsform des computerimplementiertes Verfahren zum sicheren Übertragen von Daten von einem Remote-System zu einem Gerät weisen die von dem Remote-System empfangenen Daten, welche mit dem nicht-öffentlichen kryptographischen Schlüssel des von der Schlüsselbereitstellungseinheit des Remotesystems bereitgestellten hashbasierten Schlüsselpaares signiert sind, neben Nutzdaten den von der Verschlüsselungseinheit des Remote-Systems zur Verschlüsselung des öffentlichen kryptographischen Schlüssels verwendeten kryptographischen Schlüssel (k), insbesondere einen einmalig verwendeten kryptographischen Schlüssel (otk), sowie die hashbasierte Signatur auf.

Bei einer möglichen Ausführungsform des computerimplementiertes Verfahren zum sicheren Übertragen von Daten von einem Remote-System zu einem Gerät wird der zur Verschlüsselung des öffentlichen kryptographischen Schlüssels verwendete kryptographischen Schlüssel (k), insbesondere ein einmalig verwendeter kryptographischer Schlüssel bzw. One Time Key (otk), aus einem Speicher des Remote-Systems ausgelesen.

Bei einer möglichen Ausführungsform des computerimplementierten Verfahrens zum sicheren Übertragen von Daten von einem Remote-System zu einem Gerät wird der in dem Speicher des Gerätes gespeicherte verschlüsselte öffentliche kryptographische Schlüssel mittels des erhaltenen kryptographischen Schlüssels (k) zur Bereitstellung des öffentlichen kryptographischen Schlüssels entschlüsselt.

Bei einer möglichen Ausführungsform des computerimplementiertes Verfahren zum sicheren Übertragen von Daten von einem Remote-System zu einem Gerät wird die hashbasierte Signatur (Sig_sk i) der durch das Gerät von dem Remote-System empfangenen mit dem nicht-öffentlichen kryptographischen Schlüssel (sk i) signierten Daten mittels des entschlüsselten bereitgestellten öffentlichen kryptographische Schlüssels (pk i) verifiziert.

Die Erfindung schafft ferner ein Übertragungssystem zur sicheren Übertragung von Daten von einem Remote-System zu einem Gerät mit den im Patentanspruch 19 angegebenen Merkmalen.

Es können dabei zwei beliebige technische Einheiten verwendet werden. Die erste technische Einheit (auch als Remote-System bezeichnet) verfügt über genügend Ressourcen und kümmert sich um höhere Komplexität während die andere technische Einheit (auch als Gerät bezeichnet) über nur geringe Ressourcen verfügt und vorzugsweise nur hashbasierte Signaturen validiert. Das Gerät kann beispielsweise ein Client, ein Slave, ein Empfänger oder je nach Anwendung ein sonstiges ressourcenbeschränktes Gerät sein.

Die Erfindung schafft demnach ein Übertragungssystem zur sicheren Übertragung von Daten von einem Remote-System zu einem Gerät mit
einer Schlüsselbereitstellungseinheit des Remote-Systems, die dazu ausgelegt ist, mindestens ein hashbasiertes Schlüsselpaar (sk i, pk i) bereitzustellen, wobei das bereitgestellte hashbasierte Schlüsselpaar (sk i, pk i) einen nicht - öffentlichen kryptographischen Schlüssel (sk i) und einen zugehörigen öffentlichen kryptographischen Schlüssel (pk i) umfasst;
einem Speicher des Gerätes zum Speichern des öffentlichen kryptographischen Schlüssels (pk 1) des von der Schlüsselbereitstellungseinheit des Remote-Systems bereitgestellten ersten hashbasierten Schlüsselpaares (sk 1, pk 1) in einer integritätsgeschützten Form;
einem Datenübertragungskanal zur Übertragung von Daten von dem Remote-System zu dem Gerät, wobei die übertragenen Daten mit einem von der Schlüsselbereitstellungseinheit weiteren bereitgestellten nicht - öffentlichen kryptographischen Schlüssel (sk i) signiert sind; und
einer Verifizierungseinheit des Gerätes, die dazu ausgelegt ist, die von dem Gerät über den Datenübertragungskanal von dem Remote-System empfangenen Daten als gültig zu akzeptieren, sofern die hashbasierte Signatur (Sig sk i) der von dem Gerät empfangenen mit dem nicht - öffentlichen kryptographischen Schlüssel (sk i) signierten Daten durch die Verifizierungseinheit des Gerätes mittels des zugehörigen vertrauenswürdig erneuerten öffentlichen kryptographischen Schlüssels (pk i) erfolgreich verifiziert wird.

Der zur Verifizierung der hashbasierten Signatur (Sig- sk i) herangezogene öffentliche kryptographische Schlüssel (pk i) wird dabei auf Basis eines vorherigen öffentlichen kryptographischen Schlüssels (pk i-x mit 1 <= x < i; 1 <= i <= n) vertrauenswürdig erneuert. Der zur Verifizierung der hashbasierten Signatur (Sig- sk i) herangezogene öffentliche kryptographische Schlüssel (pk i) wird vorzugsweise auf Basis des öffentlichen kryptographischen Schlüssels (pk 1) des von der Schlüsselbereitstellungseinheit des RemoteSystems bereitgestellten ersten hashbasierten Schlüsselpaares (sk 1, pk 1) vertrauenswürdig erneuert. Der öffentliche kryptographische Schlüssel (pk 1) des von der Schlüsselbereitstellungseinheit des Remote-Systems in der vertrauenswürdigen Umgebung dem Gerät bereitgestellten ersten hashbasierten Schlüsselpaares (sk 1, pk 1) bildet hierbei einen Vertrauensanker (Anchor of Trust).

Die Erfindung schafft ferner ein Gerät für ein derartiges Übertragungssystem mit einem Speicher zum Speichern mindestens eines öffentlichen kryptographischen Schlüssels (pk 1) eines von der Schlüsselbereitstellungseinheit des Remote-Systems in einer vertrauenswürdigen Umgebung bereitgestellten ersten hashbasierten Schlüsselpaares (sk 1, pk 1) und mit
einer Verifizierungseinheit, die dazu ausgelegt ist, signierte Daten, die durch das Gerät von dem Remote-System empfangen werden, als gültig zu akzeptieren, falls eine hashbasierte Signatur (Sig_sk i) der empfangenen Daten, welche mit einem nicht-öffentlichen kryptographischen Schlüssel (sk i) eines von der Schlüsselbereitstellungseinheit des Remote-Systems bereitgestellten hashbasierten Schlüsselpaares (sk i, pk i) signiert sind, durch die Verifizierungseinheit mittels des zugehörigen vertrauenswürdig erneuerten öffentlichen kryptographischen Schlüssels (pk i) erfolgreich verifiziert wird.

Die Erfindung schafft ferner ein Remote-System für ein derartiges Übertragungssystem mit einer Schlüsselbereitstellungseinheit, die dazu ausgelegt ist, mindestens ein hashbasiertes Schlüsselpaar (sk i, pk i) zu erzeugen, wobei jedes erzeugte hashbasierte Schlüsselpaar (sk i, pk i) einen nicht-öffentlichen kryptographischen Schlüssel (sk i) und einen zugehörigen öffentlichen kryptographischen Schlüssel (pk i) umfasst, wobei der öffentliche kryptographische Schlüssel (pk 1) des von der Schlüsselbereitstellungseinheit bereitgestellten ersten hashbasierten Schlüsselpaares (sk 1, pk 1) mindestens einem Gerät des Übertragungssystems bereitgestellt wird.

Mögliche Ausführungsformen des erfindungsgemäßen Verfahrens und des erfindungsgemäßen Übertragungssystems zur sicheren Übertragung von Daten von einem Remote-System zu einem Gerät oder sonstigen technischen Einheit werden unter Bezugnahme auf die beigefügten Figuren im Weiteren detailliert beschrieben.

Es zeigen:
Fig. 1 ein Ablaufdiagramm einer möglichen Ausführungsform des erfindungsgemäßen Verfahrens Übertragungssystem zur sicheren Übertragung von Daten von einem RemoteSystem zu einem Gerät;
Fig. 2 und 3 jeweils ein schematisches Blockdiagramm zur Darstellung einer ersten Ausführungsform des erfindungsgemäßen Verfahrens und des erfindungsgemäßen Übertragungssystems;
Fig. 4 und 5 jeweils ein schematisches Blockdiagramm zur Darstellung einer zweiten Ausführungsform des erfindungsgemäßen Verfahrens und des erfindungsgemäßen Übertragungssystems;
Fig. 6 und 7 jeweils ein schematisches Blockdiagramm zur Darstellung einer dritten Ausführungsform des erfindungsgemäßen Verfahrens und des erfindungsgemäßen Übertragungssystems.

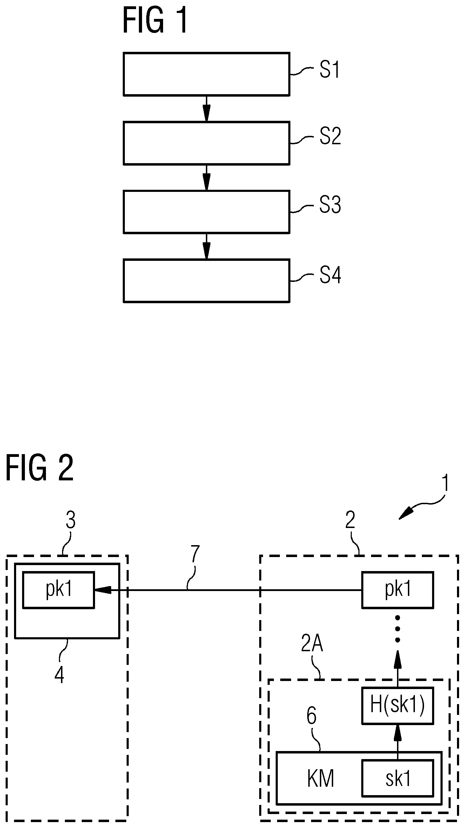

Wie man in dem Ablaufdiagramm gemäß Fig.1 erkennen kann, umfasst das erfindungsgemäße computerimplementiertes Verfahren zum hashbasierten sicheren Übertragen von Daten von einem Remote-System 2 zu einem Gerät 3 vier Haupt- Schritte S1 bis S4.

Die Fig. 2 bis 7 zeigen schematisch verschiedene Ausführungsbeispiele eines Übertragungssystems 1, bei dem das erfindungsgemäße computerimplementierte Verfahren zum sicheren Übertragen von Daten ausgeführt werden kann. Das Übertragungssystem 1 umfasst ein Remote-System 2 und ein Gerät 3, die über einen drahtlosen oder drahtgebundenen Übertragungskanal 7 zur Datenübertragung miteinander verbunden sind.

Bei dem erfindungsgemäßen Verfahren können das Gerät 3 und das Remote System 2 ausgetaucht werden. Das erfindungsgemäße Verfahren funktioniert für zwei beliebige elektronische Einrichtungen 2, 3. Das Remote System 2 kann dabei zusätzliche technische Anforderungen erfüllen, wie beispilesweise ein hinsichtlich der Vertraulichkeit geschützter Speicher zur Speicherung des nicht-öffentlichen Schlüssels sk i. Das Gerät 2 und das Remote-System 3 bilden jeweils eine elektronische Recheneinrichtung, die mit einander Remote geschützt während des Betriebs kommunizieren können.

In einem ersten Schritt S1 des in Fig.1 dargestellten Verfahrens wird mindestens ein hashbasiertes Schlüsselpaar (sk i, pk i) durch eine Schlüsselbereitstellungseinheit 2A des Remote-Systems 2 bereitgestellt. Bei einer bevorzugten Ausführungsform wird hierzu zunächst der nicht-öffentliche bzw. private kryptographische Schlüssel sk erzeugt, beispielsweise mit einem kryptografischen Zufallszahlgenerator der Schlüsselbereitstellungseinheit. Der öffentliche kryptographischen Schlüssel pk wird anschließend aus dem erzeugten nicht-öffentlichen kryptographischen Schlüssel sk mithilfe von Hashoperationen berechnet.

Jedes von der Schlüsselbereitstellungseinheit 2A bereitgestellte hashbasierte Schlüsselpaar (sk i, pk i) umfasst einen nicht-öffentlichen bzw. privaten kryptographischen Schlüssel (sk i) und einen zugehörigen öffentlichen kryptographischen Schlüssel (pk i). Bei einer möglichen Implementierung stellt ein Schüsselmanager bzw. ein Key-Manager (KM) 6 einen privaten nicht - öffentlichen bzw. privaten kryptographischen Schlüssel (sk i) bereit, der mit einer Hash-Funktion H zur Erzeugung eines zugehörigen öffentlichen kryptographischen Schlüssels (pk i) mehrfach gehashed wird (pk i= H (sk i)), wie in Fig. 2 dargestellt ist. Es sind je nach Implementierung mehrere Hashberechnungen nötig, beispielweise 256 Hash-Berechnungen.

Der Schlüsselpaargenerator bzw. die Schlüsselbereitstellungseinheit 2A speichert den berechneten nicht öffentlichen kryptographischen Schlüssel sk i vorzugsweise derart, dass dessen Integrität und Vertraulichkeit geschützt sind.

In einem weiteren Schritt S2 wird der öffentliche kryptographischen Schlüssel (pk 1) des im Schritt S1 bereitgestellten ersten hashbasierten Schlüsselpaares (sk 1, pk 1) (Index i=1) für das Gerät 3 in einer vertrauenswürdigen Umgebung (beispielsweise einer Produktionsumgebung zur Herstellung des Gerätes 3) in einer nicht veränderlichen Form bzw. in einer integritätsgeschützten Form übermittelt. Diese erfolgt in einer ersten Erst-Provisionierungsphase I zur Provisionierung bzw. Ausstattung des Gerätes 3 mit einem Vertrauensanker bzw. einem Trust-Anchor bevor das Gerät 3 die vertrauenswürdige Umgebung verlässt und in einer Betriebsphase II betrieben wird bzw. remote arbeitet.

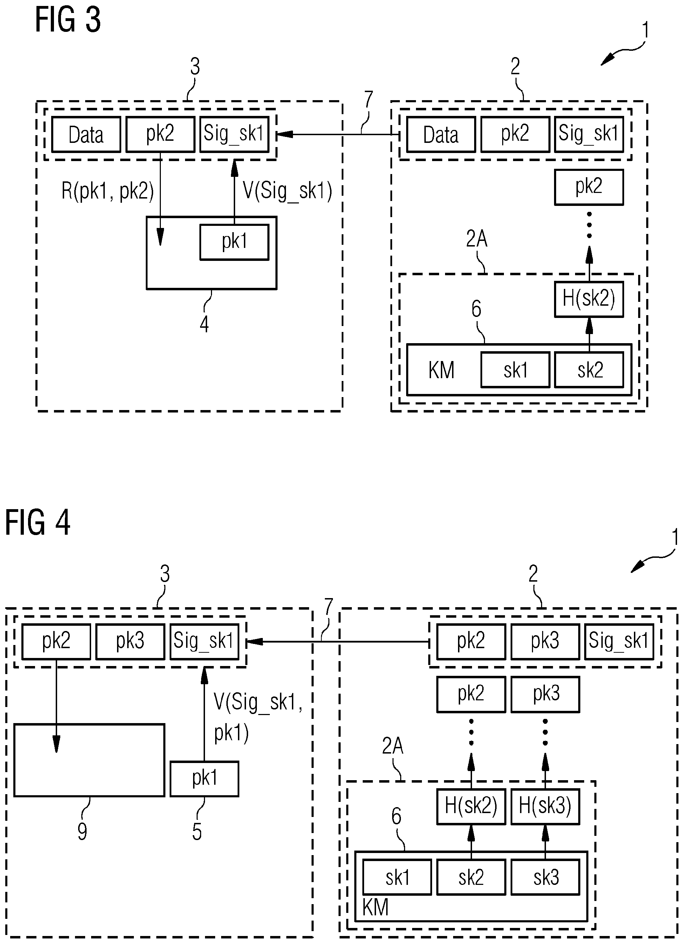

Bei der in den Fig. 2, 3 dargestellten ersten Ausführungsform des Übertragungssystems 1 wird der öffentliche kryptographische Schlüssel (pk 1) des von der Schlüsselbereitstellungseinheit 2A bereitgestellten ersten hashbasierten Schlüsselpaares (sk 1, pk 1) bei einer möglichen Implementierung einer ersten Ausführungsform des Gerätes 3 unverschlüsselt in einem sicheren integritätsgeschützten und veränderbaren bzw. überschreibbaren Speicher 4 des Gerätes 3 gespeichert. Der öffentliche kryptographische Schlüssel (pk 1) des von der Schlüsselbereitstellungseinheit 2A bereitgestellten ersten hashbasierten Schlüsselpaares (sk 1, pk 1) kann bei einer alternativen Implementierung der ersten Ausführungsform des Gerätes 3 auch optional in dem Speicher 4 des Gerätes 3 verschlüsselt gespeichert werden, solange das Gerät 3 in der Lage ist, den verschlüsselt gespeicherten ersten öffentlichen kryptographischen Schlüssel (pk 1) wieder zu entschlüsseln. Wichtig ist in jedem Fall, dass die Integrität des ersten öffentlichen kryptographischen Schlüssels pk 1 in dem Speicher 4 des Gerätes 3 geschützt bzw. gewährleistet wird.

Der integritätsgeschützte Datenspeicher ist eine Art von Datenspeicher, der Mechanismen implementiert, um die Integrität der gespeicherten Daten sicherzustellen und vor unbefugten oder zufälligen Änderungen zu schützen.

Der öffentliche kryptographische Schlüssel (pk 1) des ersten (d.h. Index i=1) von der Schlüsselbereitstellungseinheit 2A erzeugten bzw. bereitgestellten hashbasierten Schlüsselpaares (sk 1, pk 1) wird dabei vorzugsweise in einer vertrauenswürdigen Umgebung beispielsweise nach der Herstellung des Gerätes 3 unverschlüsselt oder optional verschlüsselt in dem integritätsgeschützten veränderbaren Speicher 4 des Gerätes 3 abgelegt, wie in Fig.2 schematisch dargestellt ist.

Das Übertragungssystem 1 dient zur sicheren Übertragung von Daten von einem Remote-System 2 zu einem Gerät 3. Die in den Fig. 2, 3 dargestellte erste Ausführungsform des Übertragungssystems 3 betrifft ein Basiskonzept des erfindungsgemäßen Übertragungssystems 1 und des dabei eingesetzten erfindungsgemäßen Verfahrens. Dieses Verfahren umfasst im Wesentlichen zwei Phasen nämlich eine Erst-Provisionierungs-Phase I und eine spätere Betriebsphase II. Das Remote-System 2 befindet sich in der in Fig.3 dargestellten Betriebsphase II von dem Gerät 3 entfernt (remote).

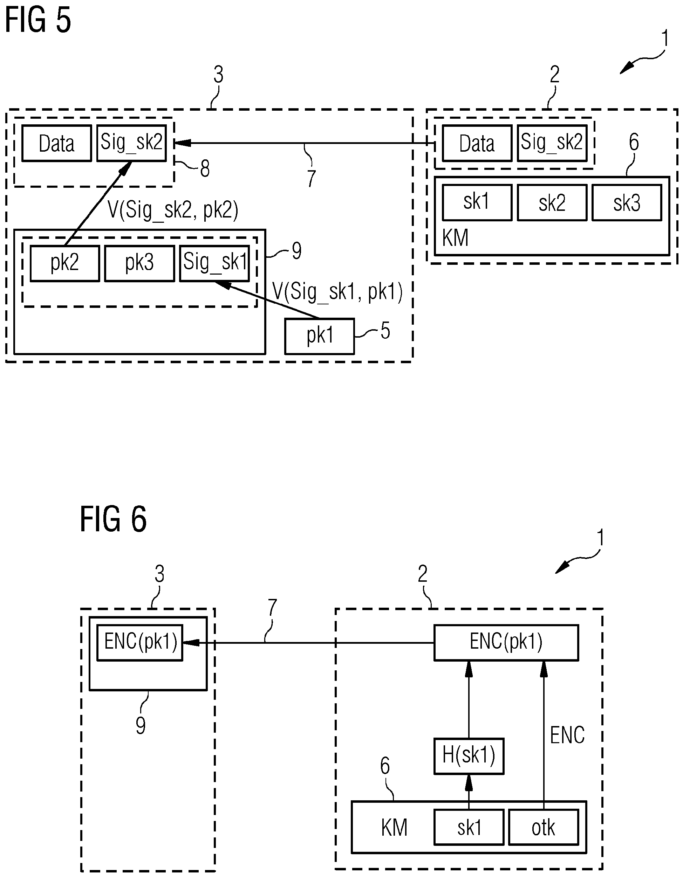

Bei der in den Fig. 4, 5 dargestellten zweiten Ausführungsform des Übertragungssystems 1 wird der öffentliche kryptographische Schlüssel (pk 1) des ersten (Index i=1) erzeugten bzw. bereitgestellten hashbasierten Schlüsselpaares (sk 1, pk 1) unverschlüsselt in einem integritätsgeschützten jedoch unveränderbaren Speicher 5 des Gerätes 3 (hard-wired bzw. festverdrahtet) gespeichert. Fig.4 stellt die Erst-Provisionierungs-Phase I und Fig.5 stellt die spätere Betriebsphase II bei der zweiten Ausführungsform des Übertragungssystems 1 dar. Das Remote-System 2 kann sich in der in Fig.5 dargestellten Betriebsphase II von dem Gerät 3 entfernt (remote) befinden.

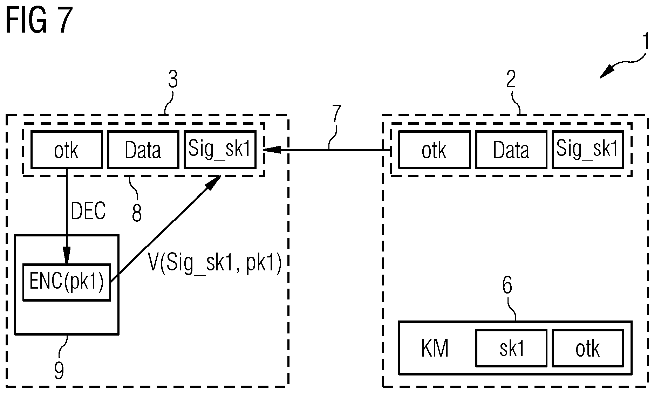

Bei der in den Fig. 6, 7 dargestellten dritten Ausführungsform des Übertragungssystems 1 wird der öffentliche kryptographische Schlüssel (pk 1) des ersten erzeugten bzw. bereitgestellten hashbasierten Schlüsselpaares (sk 1, pk 1) in verschlüsselter Form (encrypted) in einem regulären nicht-integritätsgeschützten Speicher 9 des Gerätes 3 gespeichert. Fig.6 stellt die Erst-Provisionierungs-Phase I und Fig.7 stellt die spätere Betriebsphase II bei der dritten Ausführungsform des Übertragungssystems 1 dar. Das Remote-System 2 kann sich in der in Fig.7 dargestellten Betriebsphase II von dem Gerät 3 entfernt (remote) befinden.

In einem weiteren Schritt S3 des in Fig.1 dargestellten Verfahrens werden Daten über einen drahtgebundenen oder drahtlosen Übertragungskanal 7 des Übertragungssystems 1 von dem Remote-System 2 zu dem Gerät 3 übertragen. Die übertragenen Daten sind dabei mit einem nicht - öffentlichen bzw. privaten kryptographischen Schlüssel (sk i) eines von der Schlüsselbereitstellungseinheit 2A erzeugten bzw. bereitgestellten hashbasierten Schlüsselpaares (sk i, pk i) signiert. Die Datenübertragung der signierten Daten über den Übertragungskanal 7 in Schritt S3 erfolgt in der Betriebsphase II des Gerätes 3.

In einem weiteren Schritt S4 werden die von dem Gerät 3 in der Betriebsphase II empfangenen signierten Daten als gültig akzeptiert, sofern die hashbasierte Signatur (Sig_sk i) der von dem Gerät 3 empfangenen mit dem nicht - öffentlichen kryptographischen Schlüssel (sk i) signierten Daten mittels eines auf Basis eines vorherigen öffentlichen kryptographischen Schlüssels (pk i-x mit 1 <= x < i) vertrauenswürdig erneuerten zugehörigen öffentlichen kryptographische Schlüssels (pk i) erfolgreich verifiziert wird.

Der zur Verifizierung der hashbasierten Signatur (Sig- sk i) herangezogene öffentliche kryptographische Schlüssel (pk i) wird vorzugsweise auf Grundlage des im Schritt S2 übermittelten öffentlichen kryptographischen Schlüssels (pk 1) des ersten hashbasierten Schlüsselpaares (sk 1, pk 1) vertrauenswürdig erneuert. Der im Schritt S2 übermittelte öffentliche kryptographische Schlüssel (pk 1) des von der Schlüsselbereitstellungseinheit 2A des Remote-Systems 2 im Schritt S1 bereitgestellten ersten hashbasierten Schlüsselpaares (sk 1, pk 1) dient hierzu als Vertrauensanker für die vertrauenswürdige Erneuerung bzw. Ersetzung des öffentlichen kryptographischen Schlüssels (pk i).

Die im Schritt S4 akzeptierten Daten können zur weiteren Datenverarbeitung durch eine Datenverarbeitungseinheit des Gerätes 3 zwischengespeichert werden.

Bei einer mögliche Ausführungsform des computerimplementiertes Verfahren zum sicheren Übertragen von Daten von einem Remote-System 2 zu einem Gerät 3 wird der zum Verifizieren der hashbasierten Signatur (Sig_sk i) verwendete öffentliche kryptographische Schlüssel (pk i) nach seiner Verwendung aktualisiert bzw. erneuert

Bei der ersten Ausführungsform weisen die von dem Remote-System 2 zu dem Gerät 3 in der Betriebsphase II gemäß Fig.3 (dargestellt für Index i = 2) signiert übertragenen Daten neben Nutzdaten (Data) einen weiteren öffentlichen kryptographischen Schlüssel (pk i =pk 2) eines durch die Schlüsselbereitstellungseinheit 2A des Remote-Systems 2 bereitgestellten weiteren hashbasierten Schlüsselpaares (sk i =sk 2, pk i =pk 2) und die mittels des vorherigen privaten Schlüssels (sk-(i-1) = sk 1) erzeugte hashbasierte Signatur (Sig_sk (i-1)=Sig_sk 1) auf. Die Nutzdaten (data) werden signiert und von dem Remote-System 2 über den Übertragungskanal 7 zu dem Gerät 3 übertragen und dort nach Empfang optional zwischengespeichert, wie in Fig. 3 dargestellt ist.

Die in Fig. 3 für den Index i =2 dargestellte hashbasierte Signatur (Sig_sk (i-1) =Sig sk 1) ist über die Nutzdaten (Data) und den weiteren öffentlichen kryptographischen Schlüssel (pk i =pk 2) gerechnet. Das heißt sowohl die die Nutzdaten als auch der weitere öffentliche kryptographische Schlüssel (pk i = pk 2 in Fig.3) sind mit der Signatur (Sig sk(i-1) = Sig_sk 1 in Fig.3) integritätsgeschützt. Diese hashbasierte Signatur Sig_sk 1 kann dann mit dem öffentlichen kryptographischen Schlüssel pk 1 überprüft bzw. verifiziert werden.

Der in dem integritätsgeschützten veränderbaren bzw. überschreibaren Speicher 4 des Gerätes 3 zuvor in der Erst-Provisionierungsphase I abgelegte (während sich das Gerät 3 noch in einer sicheren Umgebung befand) erste öffentliche kryptographische Schlüssel (pk 1) des zuerst erzeugten und bereitgestellten hashbasierten Schlüsselpaares (sk 1, pk 1) wird bei der ersten Ausführungsform in der Betriebsphase II des Gerätes 3 (wie in Fig. 3 für Index i= 2 dargestellt) zur Verifizierung der hashbasierten Signatur (Sig sk(i-1) = Sig_sk 1 in Fig.3) verwendet (V (Sig_sk 1, pk 1)) , (V für Verify) wie in Fig.3 schematisch dargestellt ist. Nach der erfolgreichen Verifizierung der hashbasierten Signatur (Sig sk (i-1) = Sig_sk 1 in Fig.3) mit Hilfe des öffentlichen kryptographische Schlüssel (pk 1) des zuerst erzeugten und bereitgestellten hashbasierten Schlüsselpaares (sk 1, pk 1) wird dieser öffentlichen kryptographische Schlüssel (pk 1) nach seiner Verwendung zur Verifizierung der hashbasierten Signatur (Sig sk (i-1) = Sig_sk 1 in Fig.3) zu seiner Aktualisierung bzw. Erneuerung durch den in den signiert übertragenen Daten enthaltenen öffentlichen kryptographischen Schlüssel (pk i = pk 2 in Fig.3) des nächsten i-ten von der Schlüsselbereitstellungseinheit 2A bereitgestellten hashbasierten Schlüsselpaares (sk i =sk 2 in Fig.3, pk i = pk 2 in Fig.3 ) automatisch ersetzt bzw. replaced (allgemein R (pk i-x, pk i) mit x=1) , d.h. bei dem in Fig.3 für den Index i=2 dargestellten Übertragungsschritt (R(pk 1, pk 2)). In einer anderen Variante kann x auch eine beliebige natürliche Zahl ungleich 1 und kleiner i sein. Die Daten können mit dem öffentlichen kryptographischen Schlüssel pk 2 konkateniert bzw. verkettet werden.

Bei der in den Fig. 4, 5 dargestellten zweiten Ausführungsform wird der öffentliche kryptographische Schlüssel (pk 1) des ersten bereitgestellten hashbasierten Schlüsselpaares (sk 1, pk 1) während der Erst-Provisionierungsphase I zunächst in einer vertrauenswürdigen Umgebung in einem integritätsgeschützten unveränderbaren bzw. nicht überschreibbaren Speicher 5 des Gerätes 3 gespeichert. Der zum Speichern des öffentlichen kryptographischen Schlüssels (pk 1) des ersten (Index i = 1) bereitgestellten hashbasierten Schlüsselpaares (sk 1, pk 1) verwendete integritätsgeschützte unveränderbare Speicher 5 des Gerätes 3 kann einen einmalig beschreibbaren ROM-Speicher oder einmalig programmierbare Sicherungselemente aufweisen.

Bei der in den Fig.4, 5 dargestellten zweiten Ausführungsform des computerimplementierten Verfahrens stellt die Schlüsselbereitstellungseinheit 2A des Remote-Systems 2 mindestens zwei weitere hashbasierte Schlüsselpaare (sk i+1, pk i+1; sk i+2, pk i+2) bereit, wie in Fig.4 für Index i = 1 schematisch dargestellt ist. Die beiden öffentlichen kryptographischen Schlüssel (pk i +1 = pk 2 , pk i+2 = pk 3 ), die von der Schlüsselbereitstellungseinheit 2A des Remote-Systems 2 bereitgestellt werden, werden mit dem nicht-öffentlichen kryptographischen Schlüssel (sk- i= sk 1)) des von der Schlüsselbereitstellungseinheit zuvor bereitgestellten hashbasierten Schlüsselpaares (sk i = sk 1 , pk- i = pk 1) signiert und von dem Remote-System 2 mit der entsprechenden digitalen Signatur (Sig_sk i = Sig sk 1) über den Übertragungskanal 7 an das Gerät 3 übertragen, wie in Fig.4 erkennbar ist. Fig. 4 stellt dies für Index i = 1 dar, d.h. für diesen Übertragungsschritt gilt: Sig_sk i = Sig_sk 1.

Die mit dem nicht - öffentlichen bzw. privaten kryptographischen Schlüssel (sk i) des von der Schlüsselbereitstellungseinheit 2A des Remote-Systems 2 bereitgestellten hashbasierten Schlüsselpaares ((sk i, pk-i) signiert an das Gerät 3 übertragenen öffentlichen kryptographischen Schlüssel pk i+1, pk i+2 der weiteren hashbasierten Schlüsselpaare (sk i+1, pk i+1; sk i+2, pk i+2) können zusammen mit der hashbasierten Signatur (Sig_sk i= Sig_sk 1 in Fig.4) nach Empfang durch das Gerät 3 optional zwischengespeichert werden, beispielsweise in einem Speicher des Gerätes 3, oder vorzugsweise sofort entschlüsselt und als Datenbündel 8 in dem regulären Datenspeicher 9 gespeichert werden, wie in Fig. 4 dargestellt ist. Sobald die übertragene und zwischengespeicherte hashbasierte Signatur (Sig_sk i = Sig_sk 1 in Fig.4 ) mit Hilfe des öffentlichen kryptographischen Schlüssels (pk- i= pk 1 in Fig.4) erfolgreich verifiziert worden ist (V (Sig_sk 1; pk 1)), können die empfangenen Daten (pk i+1 = pk 2 in Fig.4, pk-i+2 = pk 3 in Fig.4, Sig_sk i= Sig_sk 1 in Fig.4 ) in den regulären Datenspeicher 9 des Gerätes 3 kopiert werden, wie in den Fig.4, 5 schematisch dargestellt ist.2

Die zusammen mit den öffentlichen kryptographischen Schlüsseln (pk i +1 = pk 2; pk i+2 = pk 3) (für Index i=1 gemäß Fig.5) in den Speicher 9 des Gerätes 3 hineinkopierte hashbasierte Signatur (Sig_sk i =Sig_sk 1) wird zunächst mittels des zugehörigen öffentlichen kryptographischen Schlüssels (pk i = pk 1 gemäß Fig.5), der in dem integritätsgeschützten unveränderbaren Speicher 5 des Gerätes 3 gespeichert ist, durch die Verifizierungseinheit des Gerätes 3 verifiziert (V (Sig_sk 1; pk 1)).

Nutzdaten bzw. Daten (data) werden signiert und von dem Remote-System 2 zu dem Gerät 3 übertragen und dort nach ihrem Empfang entschlüsselt und als Datenbündel 8 gespeichert, wie in Fig. 5 dargestellt ist. Das empfangene Datenbündel 8 umfasst neben den Nutzdaten (data) auch die Signatur (Sig).

Eine mitübertragene hashbasierte Signatur (Sig_sk i+1 = Sig_sk 2 in Fig.5 für Index i = 1) der Daten (Data), die von dem Remote-System 2 an das Gerät 3 mit einem nicht-öffentlichen kryptographischen Schlüssel (sk i +1) eines weiteren hashbasierten Schlüsselpaares (sk i+1, pk i+1) signiert übertragen werden, wird mittels des zuvor in dem Speicher 9 des Gerätes 3 gespeicherten zugehörigen öffentlichen kryptographischen Schlüssels (pk i+1) durch die Verifizierungseinheit des Gerätes 3 verifiziert (V(Sig_sk 2; pk 2), wie in Fig.5 für Index i = 1 dargestellt ist.

Der zugehörige öffentlichen kryptographischen Schlüssels (pk i+1= pk 2 in Fig.5 wird hierzu seinerseits vorher durch die Verifizierungseinheit des Gerätes 3 anhand der Signatur (Sig_sk- i = Sig_sk 1 in Fig.5) mit Hilfe des öffentlichen kryptographischen Schlüssels (pk- i = pk 1 in Fig.5) verifiziert V(Sig_sk 1; pk 1)), wie ebenfalls in Fig.5 dargestellt ist.

Die von dem Gerät 3 über den Übertragungskanal 7 in der Betriebsphase II empfangenen Daten, die von dem Remote-System 2 an das Gerät 3 mit dem nicht - öffentlichen kryptographischen Schlüssel (sk i +1 = sk 2 in Fig.5) des weiteren hashbasierten Schlüsselpaares (sk i+1 = sk 2, pk i+1 = pk 2 in Fig.5) über den Übertragungskanal 7 mit dem kryptographische Schlüssel (sk i+1 = sk 2 in Fig.5) signiert übertragen (Sig sk 2 in Fig.5) werden, werden auf Seiten des Gerätes 3 als gültig akzeptiert und in einem Datenspeicher 9 des Gerätes 3 gespeichert, falls der durch eine Verifizierungseinheit des Gerätes 3 vorgenommene Verifizierungsvorgangerfolgreich verläuft.

Falls (erste Bedingung) die von dem Gerät 3 empfangene hashbasierte Signatur (Sig_sk i = Sig_sk 1 in Fig.4) und anschließend in den Datenspeicher 9 des Gerätes 3 kopierte hashbasierte Signatur (Sig_sk i = Sig_sk 1 in Fig.5 ) mittels des in dem integritätsgeschützten unveränderbaren Speicher 5 des Gerätes 3 gespeicherten öffentlichen kryptographischen Schlüssels (pk- i = pk 1 In Fig.5) durch die Verifizierungseinheit des Gerätes 3 erfolgreich verifiziert wird (V(Sig_sk 1; pk 1)), wie in Fig.5 dargestellt ist, und falls zudem (zweite Bedingung) die zugehörige hashbasierte Signatur (Sig_sk i+1 =Sig_sk 2 mittels des zuvor in dem Speicher 9 des Gerätes 3 kopierten zugehörigen öffentlichen kryptographischen Schlüssels (pk i +1 = pk 2 in Fig.5) des jeweiligen hashbasierten Schlüsselpaares (sk i+1, pk i+1) durch die Verifizierungseinheit des Gerätes 3 erfolgreich verifiziert wird, werden die von dem Gerät 3 empfangenen und optional zwischengespeicherten Daten (Data)als gültig akzeptiert und können beispielsweise in den regulären Datenspeicher 9 des Gerätes 3 zur weiteren Datenverarbeitung kopiert werden.

Bei einer dritten möglichen Ausführungsform des computerimplementierten Verfahrens, wie sie in den Fig. 6, 7 dargestellt ist, wird der öffentliche kryptographische Schlüssel (pk 1) des von der Schlüsselbereitstellungseinheit 2A des Remote-Systems 2 bereitgestellten ersten hashbasierten Schlüsselpaares (sk 1, pk 1) durch eine Verschlüsselungseinheit des Remote-Systems 2 mit einem kryptographischen Schlüssel (k), insbesondere mit einem einmalig verwendbaren kryptographischen Schlüssel bzw. One Time Key (otk), verschlüsselt bzw. encrypted (ENC(pk 1), wie in Fig.6 schematisch dargestellt ist. Es kann sich hier um eine authentisierte Verschlüsselung (AEAD) handeln, bei der die Integrität und Vertraulichkeit des verschlüsselten öffentlichen kryptographischen Schlüssels pk 1 garantiert werden.

Der durch die Verschlüsselungseinheit des Remote-Systems 2 verschlüsselte öffentliche kryptographische Schlüssel (ENC(pk 1)) wird in der Erst-Provisionierungsphase I über den Übertragungskanal 7 an das Gerät 3 übertragen und dort in einem regulären Speicher 9 des Gerätes 3 gespeichert, wie in Fig. 6 dargestellt ist.

Bei einer mögliche Ausführungsform des computerimplementierten Verfahrens weisen die von dem Gerät 3 über den Übertragungskanal 7 von dem Remote-System 2 in der Betriebsphase II des Gerätes 3 empfangenen Daten eines Datenbündels 8, das mit dem nicht-öffentlichen kryptographischen Schlüssel (sk i = sk 1 in Fig.7) des von der Schlüsselbereitstellungseinheit 2A des Remotesystems 2 bereitgestellten hashbasierten Schlüsselpaares (sk i, pk i) signiert ist, neben Nutzdaten (Data) und der Signatur (Sig_sk i = Sig_sk 1 in Fig.7) den von der Verschlüsselungseinheit des Remote-Systems 2 zur Verschlüsselung des öffentlichen kryptographischen Schlüssels (pk i) verwendeten kryptographischen Schlüssel (k), insbesondere den einmalig verwendbaren kryptographischen Schlüssel (otk), auf, wie in Fig. 7 erkennbar ist. Fig.7 zeigt die Situation für Index i = 1.

Der zur Verschlüsselung des öffentlichen kryptographischen Schlüssels (pk) verwendete kryptographischen Schlüssel (k) kann ausgelesen bzw. extrahiert werden, wie in Fig. 7 schematisch gezeigt ist. Bei einer alternativen Implementierung erfolgt keine Zwischenspeicherung des von dem Gerät 3 empfangenen Datenbündels. Der in dem ersten regulären Speicher 9 des Gerätes 3 gespeicherte verschlüsselte bzw. encryptete öffentliche kryptographische Schlüssel (ENC (pk 1, otk)) wird dann durch eine Entschlüsselungseinheit des Gerätes 3 mittels des extrahierten kryptographischen Schlüssels (otk) zur Bereitstellung des öffentlichen kryptographischen Schlüssels (pk 1) entschlüsselt bzw. decrypted DEC, wie in Fig.7 gezeigt ist.

Die von dem Gerät 3 empfangene und optional zwischengespeicherte hashbasierte Signatur (Sig_sk 1) der durch das Gerät 3 von dem Remote-System 2 empfangenen und mit dem nicht-öffentlichen kryptographischen Schlüssel (sk 1) signierten Daten wird mittels des von der Entschlüsselungseinheit des Gerätes 3 entschlüsselten öffentlichen kryptographischen Schlüssels (pk 1) anschließend durch eine Verifizierungseinheit des Gerätes 3 verifiziert (V(Sig_sk 1, pk 1)), wie in Fig. 7 schematisch dargestellt ist.

Die Erfindung schafft ferner gemäß einem weiteren Aspekt ein Übertragungssystem 1 zur sicheren Übertragung von Daten von einem Remote-System 2 zu einem Gerät 3. Das Remote-System 2 befindet sich in der Betriebsphase II von dem Gerät 3 entfernt (remote). Das Gerät 3 ist beispielsweise ein hinsichtlich seiner Ressourcen beschränktes Gerät 3 mit limitierten Speichermöglichkeiten und Datenverarbeitungsmöglichkeiten. Es kann über eine Kommunikationsverbindung Daten, insbesondere Nutzdaten (Data), in der Betriebsphase II von dem Remote-System 3 erhalten.

Das Übertragungssystem 1 umfasst dabei einen Schlüsselpaar-Generator bzw. eine Schlüsselbereitstellungseinheit 2A innerhalb des Remote-Systems 2, die dazu ausgelegt ist, mindestens ein hashbasiertes Schlüsselpaar (sk i, pk i) bereitzustellen. Das von der Schlüsselbereitstellungseinheit 2A des Remote-Systems 2 bereitgestellte hashbasierte Schlüsselpaar (sk i, pk i) weist einen nicht - öffentlichen kryptographischen Schlüssel (sk i) und einen zugehörigen öffentlichen kryptographischen Schlüssel (pk i) auf. Der Schlüsselpaargenerator bzw. die Schlüsselbereitstellungseinheit 2A des Remote-Systems 2 kann bei einer möglichen Ausführungsform, wie sie in den Fig. 6, 7 dargestellt ist, zudem einen einmal verwendbaren kryptografischen Schlüssel (One Time Key (otk)) bereitstellen.

Das Gerät 3 des Übertragungssystems 1 hat einem Speicher zum Speichern des öffentlichen kryptographischen Schlüssels (pk 1) des von der Schlüsselbereitstellungseinheit des Remote-Systems 2 in einer vertrauenswürdigen Umgebung bereitgestellten hashbasierten Schlüsselpaares (sk 1, pk 1) in einer integritätsgeschützten Form, welche nach dem Verlassen der vertrauenswürdigen Umgebung durch das Gerät 3 nicht mehr veränderlich ist. Dabei kann der öffentliche kryptographische Schlüssel (pk 1) des ersten (Index i = 1) bereitgestellten hashbasierten Schlüsselpaares (sk 1, pk 1) unverschlüsselt in einem integritätsgeschützten Speicher 4, 5 des Gerätes 3 gespeichert werden oder verschlüsselt (ENC (pk 1) in einem Speicher 9 des Gerätes 3 gespeichert werden.

Das Übertragungssystem 1 weist mindestens einen drahtgebunden oder drahtlosen Datenübertragungskanal 7 auf, der zur Übertragung von Daten von dem Remote-System 2 zu dem Gerät 3 vorgesehen ist. Die über den Datenübertragungskanal 7 übertragenen Daten sind mit dem nicht - öffentlichen kryptographischen Schlüssel (sk i) eines von dem der Schlüsselbereitstellungseinheit 2A des Remote-Systems 2 bereitgestellten hashbasierten Schlüsselpaares (sk i, pk i) signiert.

Das Gerät 3 des Übertragungssystem 1 weist eine Verifizierungseinheit auf, die dazu ausgelegt ist, die von dem Gerät 3 über den Datenübertragungskanal 7 von dem Remote-System 2 empfangenen Daten als gültig zu akzeptieren, sofern die hashbasierte Signatur (Sig_sk i) der von dem Gerät 3 empfangenen mit dem nicht-öffentlichen kryptographischen Schlüssel (sk_i) signierten Daten durch die Verifizierungseinheit des Gerätes 3 mittels des zugehörigen öffentlichen kryptographischen Schlüssels (pk i) erfolgreich verifiziert wird.

Die Erfindung schafft ferner ein Gerät 3 für ein derartiges Übertragungssystem 1 mit einem Speicher zum Speichern mindestens eines ersten (Index i=1) öffentlichen kryptographischen Schlüssels (pk 1) eines von der Schlüsselbereitstellungseinheit 2A des Remote-Systems 2 bereitgestellten ersten hashbasierten Schlüsselpaares (sk 1, pk 1) in einer vertrauenswürdigen Umgebung und mit einer Verifizierungseinheit, die dazu ausgelegt ist, signierte Daten, die durch das Gerät 3 von dem Remote-System2 empfangen werden, als gültig zu akzeptieren, falls eine hashbasierte Signatur (Sig_sk i) der empfangenen Daten, welche mit einem nicht-öffentlichen kryptographischen Schlüssel (sk i) eines von der Schlüsselbereitstellungseinheit 2A des Remote-Systems 2 bereitgestellten hashbasierten Schlüsselpaares (sk i, pk i) signiert sind, durch die Verifizierungseinheit des Gerätes 3 mittels des vertrauenswürdig erneuerten zugehörigen öffentlichen kryptographischen Schlüssels (pk i) erfolgreich verifiziert wird.

Die Erfindung schafft ferner ein Remote-System 2 für ein derartiges Übertragungssystem 1 mit einer Schlüsselbereitstellungseinheit 2A, die dazu ausgelegt ist, mindestens ein hashbasiertes Schlüsselpaar (sk i, pk i) bereitzustellen, wobei jedes bereitgestellte hashbasierte Schlüsselpaar (sk i, pk i) einen nicht-öffentlichen kryptographischen Schlüssel (sk i) und einen zugehörigen öffentlichen kryptographischen Schlüssel (pk i) umfasst. Ein von der Schlüsselbereitstellungseinheit 2A des Remote-Systems 2 bereitgestellter erster öffentlicher kryptographischer Schlüssel pk 1, wird während einer Erst-Provisionierungsphase I des Gerätes 3 in einer vertrauenswürdigen Umgebung an das Gerät 3 übertragen und dort integritätsgeschützt hinterlegt.

Für alle Ausführungsformen des erfindungsgemäßen Verfahrens und Übertragungssystems 1 wird für die Übertragung des ersten (Index i=1) öffentlichen kryptographischen Schlüssels pk 1 eine vertrauenswürdige Umgebung für den Übertragungskanal 7 angenommen. Jedoch ab dem zweiten (Index i = 2) öffentlichen kryptographischen Schlüssel pk 2 hochzählend ist das Gerät 3 im Betrieb und der Übertragungskanal 7 wird als unsicher angenommen, d.h. für i >= 2)

Ein Fokus des erfindungsgemäßen Verfahrens und des erfindungsgemäßen Übertragungssystems 1 liegt auf der Komplexitätsreduzierung für den Ersteller und Überprüfer einer Einmalsignatur bzw. beim Gerät 3 und dem Remote-System 2.

Außerdem bieten das erfindungsgemäßen Verfahren und das erfindungsgemäße Übertragungssystem 1 eine dynamische Aufteilung der Komplexität für den Ersteller von Einmalsignaturen bzw. andere Kommunikationspartner (Leistungsfähige Partei, Remotesystem, Hersteller des Gerätes).

Das erfindungsgemäßen Verfahren und das erfindungsgemäße Übertragungssystem 1 eignet sich für unterschiedliche Anwendungsszenarien, insbesondere für die Verwendung von hashbasierten Signaturen z. B. für Software-Updates). Das erfindungsgemäße Konzept kann aber auch auf andere Signaturanwendungen übertragen werden.

Die in den Fig.2, 3 dargestellte erste Ausführungsform betrifft ein Basiskonzept des erfindungsgemäßen Übertragungssystems 1 und des dabei eingesetzten erfindungsgemäßen Verfahrens.

Dieses umfasste im Wesentlichen zwei Phasen nämlich eine Erst-Provisionierungs-Phase I und eine spätere Betriebsphase II.

Die Figuren 2, 4, 6 zeigen für die drei Ausführungsformen des erfindungsgemäßen Übertragungssystem 1 jeweils die Provisionierungs-Phase I bei der der Übertragungskanal 7 als eine vertrauenswürdige Umgebung angenommen wird, und die Figuren 3, 5, 7 zeigen für die drei Ausführungsformen jeweils die Betriebsphase II bei welcher der Übertragungskanal 7 nicht mehr als eine vertrauenswürdige Umgebung angenommen werden kann.

In der in Fig.2 schematisch dargestellten Erst-Provisionierungs-Phase wird z.B. vor dem Betrieb des Gerätes 3 oder während der Herstellung des Gerätes 3 ein erster öffentlicher kryptographischer Schlüssel pk 1 (public key pk) zur Signaturprüfung von hashbasierten Signaturen auf das Gerät 3 übertragen und in dem Speicher 4 des Gerätes 3 integritätsgeschützt gespeichert.

Ein Schlüsselpaar-Generator bzw. eine Schlüsselbereitstellungseinheit 2A des Remote-Systems 2 (eine leistungsfähige Partei) stellt ein erstes hashbasiertes Schlüsselpaar (sk 1, pk 1) bereit und überträgt bzw- übermittelt den öffentlichen kryptographischer Schlüssel pk 1 des von der Schlüsselbereitstellungseinheit 2A bereitgestellten ersten hashbasierten Schlüsselpaares (sk 1, pk 1) an das Gerät 3, wie in Fig.2 schematisch dargestellt ist. Der Vorgang erfolgt dabei vorzugsweise in einer sicheren und vertrauenswürdigen Umgebung.

In der späteren Betriebsphase II des Gerätes 3 wird der öffentliche kryptographische Schlüssel pk zur Signaturprüfung genutzt und regelmäßig geschützt aktualisiert bzw. erneuert. Die vertrauenswürdige Erneuerung, insbesondere Ersetzung, des zur Signaturprüfung verwendeten öffentlichen kryptographischen Schlüssels pk basiert dabei aufeinem auf Basis eines vorherigen öffentlichen kryptographischen Schlüssels (pk i-x mit 1 <= x < i) vertrauenswürdig erneuerten zugehörigen öffentlichen kryptographische Schlüssels (pk i), insbesondere auf dem ursprünglichen in der vertrauenswürdigen Umgebung ausgetauschten und in dem Gerät 3 verschlüsselt oder unverschlüsselt hinterlegten ersten öffentlichen kryptographischen Schlüssel pk 1.

Ein Ausführungsbeispiel für die zweite Phase bzw. die Betriebsphase II des Gerätes 3 ist in Fig.3 dargestellt. Mit dem ersten öffentlichen kryptographischen Schlüssel pk 1 als Trust Anchor kann eine Verifizierungseinheit des Gerätes 3 während des Betriebs des Gerätes 3 eine einzige hashbasierte Signatur (beliebig oft) verifizieren. Das Remote-System 2 kann Daten (z.B. für ein Update der Software SW oder der Firmware FW oder der Konfiguration des Gerätes 3) einmalig mit dem nicht- öffentlichen kryptographischen Schlüssel sk i des von der Schlüsselbereitstellungseinheit 2A des Remote-Systems 2 bereitgestellten hashbasierten Schlüsselpaares (sk i, pk i) signieren und dem Gerät 3 integritätsgeschützt übermitteln.

Dieselben unveränderten Daten dürfen auch mit demselben privaten kryptographischen Schlüssel sk signiert werden. Es ist jedoch nicht erlaubt, unterschiedliche Daten mit demselben privaten kryptographischen Schlüssel sk zu signieren.

Diese Daten werden erfindungsgemäß von dem Remote-System 2 erweitert, indem von der Schlüsselbereitstellungseinheit 2A des Remote-Systems 2 ein neues bzw. weiteres hashbasiertes Schlüsselpaar (sk i+, pk i+1) generiert wird und der öffentliche kryptographische Schlüssel pk i dieses weiteren hashbasierten Schlüsselpaares (sk i+1, pk i+1) in die zu signierenden Daten ergänzt wird, wie in Fig.3 für Index i = 1 schematisch dargestellt ist.

Das derart signierte Datenbündel kann beim Hersteller gespeichert und erneut an das Gerät 3 gesendet werden, falls die Kommunikation fehlerhaft war. Ebenso kann dieses Datenbündel erneut generiert und mit dem nicht - öffentlichen kryptographische Schlüssel sk i des hashbasierten Schlüsselpaares (sk i, pk i) signiert werden, sofern dieser identisch bleibt.

Das Gerät 3 empfängt die Daten von dem Remote-System 2 und verifiziert die hashbasierte Signatur (Sig_sk i = Sig_sk 1) mit dem öffentlichen kryptographische Schlüssel (pk- i= pk 1). Das Gerät 3 akzeptiert die verifizierten Daten und ersetzt bzw. replaces (R(pk 1, pk 2)) den öffentlichen kryptographische Schlüssel pk 1 in dem sicheren Speicher 4 des Gerätes 3 durch den öffentlichen kryptographischen Schlüssel pk 2 des weiteren hashbasierten Schlüsselpaares (sk 2, pk 2), wie in Fig.3 schematisch dargestellt ist.

Der öffentliche kryptographische Schlüssel pk i bzw. der zugehörige nicht - öffentliche kryptographische Schlüssel sk i sind nun verbraucht und zukünftige Signaturen werden mit dem nächsten nicht -öffentlichen kryptographische Schlüssel sk i+1 erstellt und mit dem öffentlichen kryptographische Schlüssel pk i+1 des nächsten hashbasierten Schlüsselpaares (sk i+1, pk i+1) geprüft. Es wird also ein neuer Trust Anchor auf das Gerät 3 aufgebracht, der durch den alten Trust Anchor geschützt ist. Dieser Vorgang wird für jedes Update mit einem neuen Schlüsselpaar (sk-i, pk-i) erneut angewendet, wobei der Index i ein positiver Integer-Wert ist.

Bei der in den Fig. 2, 3 dargestellten ersten Ausführungsform des Übertragungssystems 1 besteht eine Anforderung dahingehend, dass die nacheinander zur Verifizierung der Signatur bereitgestellten öffentlichen kryptographischen Schlüssel pk 1 ... pk n in einem integritätsgeschützten veränderbaren Speicher 4 des Gerätes 3 abgelegt sind. Dies kann jedoch bei ressourcenbeschränkten Geräten 3 schwierig sein, insbesondere wenn dieses Gerät 3 über keinen integritätsgeschützten veränderbaren bzw. überschreibbaren Speicher 4 verfügt.

In der zweiten Ausführungsform des Übertragungssystems 1 wird daher erfindungsgemäß ein Konzept vorgeschlagen, dass nur einen integritätsgeschützten jedoch nicht veränderbaren bzw. nur einmal beschreibbaren Speicher 5 benötigt. Der nur einmal beschreibbare Speicher 5 des in den Fig. 4, 5 gemäß der zweiten Ausführungsform des Übertragungssystems 1 vorgesehenen Gerätes 3 kann z.B. einen ROM-Speicher oder einmal programmierbare Sicherungselemente (One-time Programmable Fuses) aufweisen.

In der zweiten Ausführungsform des Übertragungssystems 1 wird in der Erst-Provisionierungs-Phase I der erste (Index i = 1) öffentliche kryptographische Schlüssel pk 1 von dem Remote-System 2 in einer vertrauenswürdigen Umgebung in den integritätsgeschützten nicht veränderbaren Speicher 5 des Gerätes 3 eingebracht bzw. gespeichert.

In der Betriebsphase II des Gerätes 3 stellt die Schlüsselbereitstellungseinheit 2A des Remote-Systems 2 bei der zweiten Ausführungsform mehrere zukünftige hashbasierte Schlüsselpaare (sk n, pk n) und überträgt mehrere (mindestens zwei) zukünftige öffentliche Schlüssel (pk 2, pk3 ) zu dem Gerät 3, wie in Fig.4 schematisch dargestellt ist.

Dieses Update ist mit dem ersten nicht - öffentlichen kryptographischen Schlüssel sk 1 signiert und die hashbasierte Signatur (Sig_sk 1) wird mit dem nicht veränderbaren öffentlichen kryptographischen Schlüssel pk 1 (Trust Anchor) im Gerät 3 geprüft. Die zukünftigen öffentlichen kryptographischen Schlüssel (mindestens zwei öffentliche Schlüssel pk i bzw. pk 2 in Fig.4 und pk (i+1) bzw. pk 3 in Fig.4) werden inklusive der hashbasierten Signatur Sig_sk 1 im Gerät 3 als empfangenes Datenbündel 8 direkt verarbeitet.

Daten, die anschließend z.B. mit dem nächsten nicht - öffentlichen kryptographischen Schlüssel sk i (= sk 2 in Fig.4) signiert werden (z.B. SW- oder Konfigurations-Update), werden in dem Gerät 3 mit dem zugehörigen öffentlichen kryptographischen Schlüssel pk i (= pk 2 in Fig.4) geprüft. Um sicher zu stellen, dass die öffentlichen kryptographischen Schlüssel pk 2 bzw. pk 3 nicht verändert wurden, prüft die Verifizierungseinheit des Gerätes 3 zunächst wieder die zugehörige Signatur (Sig_sk 1) dieser öffentlichen kryptographischen Schlüssel pk 2 und pk 3 (V (Sig_sk 1; pk 1)) die in dem nicht integritätsgeschützten Speicher 9 des Gerätes 3 gespeichert ist. Diese Signaturprüfung erfolgt mit Hilfe des nicht veränderlichen öffentlichen kryptographischen Schlüssel pk 1 (Trust Anchor) bevor der so verifizierte öffentliche kryptographische Schlüssel pk 2 zur eigentlichen Signaturprüfung V (Sig_sk 2; pk 2) genutzt wird, wie in Fig.5 schematisch dargestellt ist. Eine weitere Signatur Sig_sk3 und wird mit dem dritten öffentlichen kryptographischen Schlüssel pk3 verifiziert (V (Sig_sk3; pk3)).

Falls weitere Daten signiert und von dem Gerät 3 erfolgreich verifiziert werden sollen, kann dieses Konzept wie folgt fortgesetzt werden. Es werden neue Schlüsselpaare (mindestens zwei) von der Schlüsselbereitstellungseinheit 2A des Remote-Systems 2 generiert und bereitgestellt. Der private bzw. nicht- öffentliche kryptographische Schlüssel sk3 wird dann zum Signieren der neuen öffentlichen kryptographisch Schlüssel verwendet, die später inklusive Signatur im Gerät 3 abgelegt werden. Das heißt der dritte nicht- öffentliche kryptographische Schlüssel sk3, wird für das nächste Schlüssel-Update reserviert, welches die öffentlichen kryptographischen Schlüssel pk4 und pk5 signiert mit Sig_sk3 beinhaltet. Mit dem dritten öffentlichen kryptographischen Schlüssel pk3 prüft das Gerät 3 die Signatur Sig_sk3 und akzeptiert im erfolgreichen Fall das Schlüssel-Update. Bei der Verifizierung der Signatur wird die Kette bis zu dem ersten öffentlichen kryptographischen Schlüssel pk 1 geprüft.

Die weitere Aktualisierung von öffentlichen kryptographischen Schlüsseln erfolgt analog, d.h. es werden immer additiv die neuen öffentlichen kryptographischen Schlüssel (mindestens zwei) inklusive Signatur in dem Gerät 3 abgelegt. Mindestens ein Schlüsselpaar wird zum Signieren und erfolgreichen Verifizieren von jedem Schlüssel-Update reserviert.

Falls in einem Gerät 3 weder ein integritätsgeschützter veränderbarer Speicher 4 noch ein nicht veränderbarer Speicher 5 vorhanden ist, wird bei einer weiteren dritten Ausführungsform des Übertragungssystems 1, wie sie in den Fig.6 ,7 dargestellt ist, erfindungsgemäß vorgeschlagen den öffentlichen kryptographischen Schlüssel pk nicht direkt auf das Gerät 3 aufzubringen, sondern dort encrypted bzw. verschlüsselt (ENC (pk)) bereitzustellen. Hierzu wird auf dem Remote-System 2 durch eine Verschlüsselungseinheit des Remote-Systems 2 der öffentlichen kryptographische Schlüssel pk vorzugsweise mit einem One-time Schlüssel (otk) verschlüsselt (insbesondere mit einem AEAD-Algorithmus z.B. AES-GCM) und der verschlüsselte öffentliche kryptographische Schlüssel (ENC (pk)) wird zu dem Gerät 3 übertragen und dort im Speicher 9 abgelegt, wie in Fig.6 dargestellt ist. Dies kann sowohl initial in der Erstprovisierungsphase I als auch in der späteren Betriebsphase II des Gerätes 3 durchgeführt werden. Der erste öffentliche kryptographische Schlüssel pk 1 wird verschlüsselt, damit die Integrität mit einem authentisierten Verschlüsselungsverfahren z.B. AEAD durch das Remote-System 2 geschützt wird. Hierdurch kann die Anforderung an das Vorsehen eines integritätsgeschützten Speichers bei dem Gerät 3 entfallen und man kann in dem Gerät 3 einen regulären Speicher 9 verwenden. Dafür benötigt das Gerät 3 eine symmetrische authentisierte Entschlüsselungseinheit. Bei der dritten in den Fig. 6, 7 dargestellten Ausführungsform übernimmt das Remote-System 2 den Integritätsschutz für den öffentlichen kryptographischen Schlüssel pk bei dem Gerät 3.

Wenn der öffentliche kryptographische Schlüssel pk i zur Überprüfung einer Signatur von Daten benötigt wird, wird der One-time Schlüssel otk mit den Daten disclosed und mit dem nicht-öffentlichen bzw. privaten kryptographischen Schlüssel sk i signiert, wie in Fig.7 für i=1 schematisch dargestellt ist. Das Gerät 3 extrahiert dann den One-time Schlüssel otk, entschlüsselt bzw. decryptet (DEC) den öffentlichen kryptographische Schlüssel pk 1 und kann mit diesem anschließend die Signatur prüfen (V (Sig_sk 1; pk 1)), wie in Fig.7 schematisch dargestellt ist.

Die in den Fig. 6, 7 dargestellte Erweiterung gemäß der dritten Ausführungsform kann sowohl in dem Basiskonzept gemäß der Fig. 2, 3 als auch in der in den Fig. 4, 5 dargestellten zweiten Ausführungsform des Übertragungssystem 1 angewendet werden.

Das in den Fig. 2, 3 gezeigte erfindungsgemäße Basiskonzept kann bekannte Basisbausteine bzw. Module verwenden und diese für Signaturanwendungen auf ressourcenbeschränkten Geräten 3 miteinander kombinieren.

Die beschriebenen Erweiterungen bzw. die in den Fig.4 bis 7 dargestellten Ausführungsformen erlauben die Anwendung des Basiskonzeptes auch dann, wenn kein integritätsgeschützter veränderbarer Speicher 4 und/oder nicht veränderbarer Speicher 5 auf dem Gerät 3 vorhanden ist.

Die verschiedenen Ausführungsformen des erfindungsgemäßen Verfahrens können für viele unterschiedliche Anwendungen eingesetzt werden. Beispielsweise kann das erfindungsgemäße Verfahren bei einem Firmware-Update, einem Softwareupdate, einem Konfigurationsupdate, einem Austausch von authentisierten Daten und/oder für authentisierte Kommunikation und Datenaustausch eingesetzt werden. Das erfindungsgemäße Verfahren kann für unterschiedlichste elektronische Geräte eingesetzt werden, insbesondere für industrielle Geräte einer Automatisierungsanlage.

Unabhängig vom grammatikalischen Geschlecht eines bestimmten Begriffes sind Personen oder Gegenstände mit männlicher, weiblicher oder anderer Geschlechteridentität mit umfasst.

## Patentansprüche

1. Computerimplementiertes Verfahren zum hashbasierten sicheren Übertragen von Daten von einem Remote-System (2) zu einem Gerät (3), mit den Schritten:
Bereitstellen (S1) mindestens eines hashbasierten Schlüsselpaares (sk i, pk i) durch eine Schlüsselbereitstellungseinheit (2A) des Remote-Systems (2), wobei das bereitgestellte hashbasierte Schlüsselpaar (sk i, pk i) einen nicht - öffentlichen kryptographischen Schlüssel (sk i) und einen zugehörigen öffentlichen kryptographischen Schlüssel (pk i) umfasst;
Übermitteln (S2) des öffentlichen kryptographischen Schlüssels (pk 1) des ersten von der Schlüsselbereitstellungseinheit (2A) bereitgestellten hashbasierten Schlüsselpaares (sk 1, pk 1) an das Gerät (3) in einer integritätsgeschützten Form;
Übertragen (S3) von Daten von dem Remote-System (2) zu dem Gerät (3), wobei die übertragenen Daten mit einem nicht - öffentlichen kryptographischen Schlüssel (sk i) mittels eines hashbasierten Signaturverfahrens signiert sind; und
Akzeptieren (S4) der von dem Gerät (3) empfangenen signierten Daten als gültig, sofern die hashbasierte Signatur (Sig_sk i) der von dem Gerät (3) empfangenen mit dem nicht-öffentlichen kryptographischen Schlüssel (sk i) signierten Daten mittels eines auf Basis eines vorherigen öffentlichen kryptographischen Schlüssels (pk i-x mit 1 <= x < i; 1 <= i <= n ) vertrauenswürdig erneuerten zugehörigen öffentlichen kryptographische Schlüssels (pk i) erfolgreich verifiziert wird.

2. Verfahren nach Anspruch 1, wobei der öffentliche kryptographische Schlüssel (pk 1) des ersten bereitgestellten hashbasierten Schlüsselpaares (sk 1, pk 1) unverschlüsselt in einem integritätsgeschützten Speicher (4; 5) des Gerätes (3) gespeichert wird oder integritätsgeschützt in einem Speicher (9) des Gerätes (3) gespeichert wird.

3. Verfahren nach Anspruch 1, wobei der zum Verifizieren der hashbasierten Signatur (Sig_sk i) verwendete öffentliche kryptographische Schlüssel (pk i) nach seiner Verwendung erneuert wird, indem der verwendete öffentliche kryptographische Schlüssel (pk i) durch einen bereitgestellten nächsten öffentlichen und integritätsgeschützten kryptographischen Schlüssel (pk i+1) ersetzt wird.

4. Verfahren nach Anspruch 2, wobei der öffentliche kryptographische Schlüssel (pk 1) des ersten bereitgestellten hashbasierten Schlüsselpaares (sk 1, pk 1) in einem integritätsgeschützten veränderbaren Speicher (4) des Gerätes (3) gespeichert wird.

5. Verfahren nach einem der Ansprüche 1 bis 4, wobei die von dem Remote-System (2) zu dem Gerät (3) signiert übertragenen Daten neben Nutzdaten (data) mindestens einen öffentlichen kryptographischen Schlüssel (pk i+1) eines weiteren durch die Schlüsselpaarbereitstellungseinheit (2A) des Remote-Systems (2) bereitgestellten hashbasierten Schlüsselpaares (sk i+1, pk i+1) sowie die digitale hashbasierte Signatur (Sig_sk i) aufweisen.

6. Verfahren nach einem der Ansprüche 2 bis 5, wobei der öffentliche kryptographische Schlüssel (pk i) eines bereitgestellten hashbasierten Schlüsselpaares (sk i, pk i) nach der Verifizierung der hashbasierten Signatur (Sig_sk i) zu seiner Erneuerung durch den öffentlichen kryptographischen Schlüssel (pk i +1) des weiteren erzeugten hashbasierten Schlüsselpaares (sk i+1, pk i+1) automatisch ersetzt wird, der in den signiert übertragenen Daten enthaltenen ist.

7. Verfahren nach Anspruch 1 oder 2, wobei die öffentlichen kryptographischen Schlüssel (pk 1 bis pk n) der von einer Schlüsselbereitstellungseinheit (2A) bereitgestellten hashbasierten Schlüsselpaare in einem integritätsgeschützten Speicher (5) des Gerätes (3) abgelegt werden.

8. Verfahren nach Anspruch 7, wobei die Schlüsselbereitstellungseinheit (2A) des Remote-Systems (2) mindestens zwei weitere öffentliche kryptographische Schlüssel (pk i+1, pk i+2) von hashbasierten Schlüsselpaaren (sk i+1, pk i+1; sk i+2, pk i+2) übermittelt, wobei die öffentlichen kryptographischen Schlüssel (pk i+1, pk i+2) mit dem nicht-öffentlichen kryptographischen Schlüssel (pk i) des von der Schlüsselbereitstellungseinheit (2A) zuvor bereitgestellten hashbasierten Schlüsselpaares (sk i, pk i) signiert werden und von dem Remote-System (2) an das Gerät (3) übermittelt werden.

9. Verfahren nach Anspruch 8, wobei die öffentlichen kryptographischen Schlüssel (pk i+1, pk i+2) der weiteren hashbasierten Schlüsselpaare (sk i+1, pk i+1; sk i+2, pk i+2), die mit dem nicht-öffentlichen kryptographischen Schlüssel (sk i) des von der Schlüsselbereitstellungseinheit des Remote-Systems (2) hashbasierten Schlüsselpaares (sk i, pk i) signiert werden, an das Gerät (3) übermittelt werden und zusammen mit der hashbasierten Signatur (Sig_sk i) verarbeitet werden.

10. Verfahren nach Anspruch 9, wobei eine hashbasierte Signatur (Sig_sk i +1; Sig_sk i+2) von Daten, die von dem Remote-System (2) an das Gerät (3) mit einem nicht-öffentlichen kryptographischen Schlüssel (sk i+1; sk i+2) eines weiteren hashbasierten Schlüsselpaares (sk i+1, pk i+1 ; sk i+2, pk i+2) signiert übertragen werden, mittels des zuvor übermittelten zugehörigen öffentlichen kryptographische Schlüssels (pk i+1 ; pk i+2) des jeweiligen hashbasierten Schlüsselpaares (sk i+1 , pk i+1; sk i+2, pk i+2) verifiziert wird.

11. Verfahren nach Anspruch 10, wobei die zusammen mit dem weiteren hashbasierten Schlüsselpaar (sk i+1, pk i+1; sk i+2, pk i+2) gespeicherte hashbasierte Signatur (Sig_sk i) mittels des öffentlichen kryptographische Schlüssels (pk i), der in dem integritätsgeschützten unveränderbaren Speicher (5) des Gerätes (3) gespeichert ist, verifiziert wird.

12. Verfahren nach Anspruch 11 wobei die von dem Gerät (3) in einer Betriebsphase empfangenen Daten, die von dem Remote-System (2) an das Gerät (3) mit dem nicht-öffentlichen kryptographischen Schlüssel (sk i+1 ; sk i+2) eines weiteren hashbasierten Schlüsselpaares (sk i+1 , pk i+1; sk i+2, pk i+2) signiert übertragen werden, als gültig akzeptiert werden und in einem Datenspeicher (9) des Gerätes (3) gespeichert werden, falls die zusammen mit dem weiteren hashbasierten Schlüsselpaar (sk i+1, pk i+1; sk i+2, pk i+2) in dem Speicher (9) des Gerätes (3) kopierte hashbasierte Signatur (Sig_sk i) mittels des in dem integritätsgeschützten unveränderbaren Speicher (5) des Gerätes (3) gespeicherten öffentlichen kryptographischen Schlüssels (pk i) erfolgreich verifiziert wird und falls die zugehörige hashbasierte Signatur (Sig_sk i+1; Sig_sk i+2) mittels des zuvor in dem Datenspeicher (9) des Gerätes (3) gespeicherten zugehörigen öffentlichen kryptographische Schlüssels (pk i+1; pk i+2) des jeweiligen hashbasierten Schlüsselpaares (sk i +1, pk i+1; sk i+2, pk i+2) erfolgreich verifiziert wird.

13. Verfahren nach Anspruch 1 oder 2, wobei der öffentliche kryptographische Schlüssel (pk i ) eines von der Schlüsselbereitstellungseinheit (2A) des Remote-Systems (2) bereitgestellten hashbasierten Schlüsselpaares (sk i, pk i) durch eine Verschlüsselungseinheit des Remote-Systems (2) mit einem kryptographischen Schlüssel (k), insbesondere mit einem einmalig verwendbaren kryptographischen Schlüssel (otk), verschlüsselt wird.

14. Verfahren nach Anspruch 13, wobei der durch die Verschlüsselungseinheit des Remote-Systems (2) geschützte öffentliche kryptographische Schlüssel (ENC(pk 1)) an das Gerät (3) übertragen wird und in einem Datenspeicher (9) des Gerätes (3) gespeichert wird.

15. Verfahren Anspruch 14, wobei die durch das Gerät (3) von dem Remote-System (2) empfangenen Daten, welche mit dem nicht-öffentlichen kryptographischen Schlüssel (sk i) eines von der Schlüsselbereitstellungseinheit des Remote-Systems (2) bereitgestellten hashbasierten Schlüsselpaares (sk i, pk i) signiert sind, neben Nutzdaten (data) den von der Verschlüsselungseinheit des Remote-Systems (2) zur Verschlüsselung des öffentlichen kryptographischen Schlüssels (pk i) verwendeten kryptographischen Schlüssel (k) , insbesondere einen einmalig verwendeten kryptographischen Schlüssel (otk), sowie die hashbasierte Signatur (Sig_sk i) aufweisen.

16. Verfahren nach Anspruch 15, wobei der zur Verschlüsselung und zum Integritätsschutz des öffentlichen kryptographischen Schlüssels (pk i) verwendete kryptographischen Schlüssel (k) von dem Gerät (3) empfangen wird, wobei der empfangene kryptographische Schlüssel (k) anschließend zur Entschlüsselung des in dem ersten Datenspeicher (9) des Gerätes (3) verschlüsselt hinterlegten öffentlichen kryptographischen Schlüssels (pk i) verwendet wird.

17. Verfahren nach Anspruch 16, wobei der in dem ersten Datenspeicher (9) des Gerätes (3) gespeicherte verschlüsselte und integritätsgeschützte öffentliche kryptographische Schlüssel (ENC (pk i)) mittels des empfangenen kryptographischen Schlüssels (k) zur Bereitstellung des öffentlichen kryptographischen Schlüssels (pk i) durch eine Entschlüsselungseinheit des Gerätes (3) decrypted bzw. entschlüsselt wird.

18. Verfahren nach Anspruch 17, wobei die hashbasierte Signatur (Sig_sk i) der durch das Gerät (3) von dem Remote-System (2) empfangenen und mit dem nicht-öffentlichen kryptographischen Schlüssel (sk i) signierten Daten mittels des durch die Entschlüsselungseinheit des Gerätes (3) entschlüsselten öffentlichen kryptographische Schlüssels (pk i) durch eine Verifizierungseinheit des Gerätes (3) verifiziert wird.

19. Übertragungssystem (1) zur sicheren Übertragung von Daten von einem Remote-System (2) des Übertragungssystems (1) zu einem Gerät (3) des Übertragungssystems (1), insbesondere unter Verwendung eines Verfahrens gemäß einem der Ansprüche 1 bis 18,
mit einer Schlüsselbereitstellungseinheit (2A) des Remote-Systems (2), die dazu ausgelegt ist, mindestens ein hashbasiertes Schlüsselpaar (sk i, pk i) bereitzustellen, wobei jedes bereitgestellte hashbasierte Schlüsselpaar (sk i, pk i) einen nicht - öffentlichen kryptographischen Schlüssel (sk i) und einen zugehörigen öffentlichen kryptographischen Schlüssel (pk i) umfasst;
mit einem Speicher (4; 5; 9) des Gerätes (3) zum Speichern des öffentlichen kryptographischen Schlüssels (pk 1) des ersten hashbasierten Schlüsselpaares (sk 1, pk 1) in einer integritätsgeschützten Form;
mit einem Datenübertragungskanal (7) zur Übertragung von Daten von dem Remote-System (2) zu dem Gerät (3), wobei die übertragenen Daten mit einem nicht- öffentlichen kryptographischen Schlüssel (sk i) eines von der Schlüsselbereitstellungseinheit (2A) des Remote-Systems (2) bereitgestellten hashbasierten Schlüsselpaares (sk i, pk i) signiert sind; und
mit einer Verifizierungseinheit des Gerätes (3), die dazu ausgelegt ist, die von dem Gerät (3) über den Datenübertragungskanal (7) von dem Remote-System (2) empfangenen Daten als gültig zu akzeptieren, sofern die hashbasierte Signatur (Sig_sk i) der von dem Gerät (3) über den Datenübertragungskanal (7) empfangenen und mit dem nicht-öffentlichen kryptographischen Schlüssel (sk i) signierten Daten durch die Verifizierungseinheit des Gerätes (3) mittels eines zugehörigen vertrauenswürdig erneuerten öffentlichen kryptographischen Schlüssels (pk i) erfolgreich verifiziert wird.

20. Übertragungssystem nach Anspruch 19, wobei der zur Verifizierung der hashbasierten Signatur (Sig_sk i) herangezogene öffentliche kryptographische Schlüssel (pk i) auf Basis des öffentlichen kryptographischen Schlüssels (pk 1) des von der Schlüsselbereitstellungseinheit (2A) des Remote-Systems (2) bereitgestellten ersten hashbasierten Schlüsselpaares (sk 1, pk 1) vertrauenswürdig erneuert wird.

21. Gerät (3) für ein Übertragungssystem (1) nach Anspruch 19 oder 20, mit einem Speicher zum Bereitstellen mindestens eines öffentlichen kryptographischen Schlüssels (pk 1) eines von der Schlüsselbereitstellungseinheit (2A) des Remote-Systems (2) in einer vertrauenswürdigen Umgebung bereitgestellten ersten hashbasierten Schlüsselpaares (sk 1, pk 1) und mit einer Verifizierungseinheit, die dazu ausgelegt ist, signierte Daten, die durch das Gerät (3) von dem Remote-System (2) empfangen werden, als gültig zu akzeptieren, falls eine hashbasierte Signatur (Sig_sk i) der empfangenen Daten, welche mit einem nicht-öffentlichen kryptographischen Schlüssel (sk i) eines von der Schlüsselbereitstellungseinheit (2A) des Remote-Systems (2) bereitgestellten weiteren hashbasierten Schlüsselpaares (sk i, pk i) signiert sind, durch die Verifizierungseinheit des Gerätes (3) mittels eines vertrauenswürdig erneuerten zugehörigen öffentlichen kryptographischen Schlüssels (pk i) erfolgreich verifiziert wird.

22. Remote-System (2) für ein Übertragungssystem (1) nach Anspruch 19 oder 20, mit einer Schlüsselbereitstellungseinheit (2A), die dazu ausgelegt ist, mindestens ein hashbasiertes Schlüsselpaar (sk i, pk i) bereitzustellen, wobei das bereitgestellte hashbasierte Schlüsselpaar (sk i, pk i) einen nicht-öffentlichen kryptographischen Schlüssel (sk i) und einen zugehörigen öffentlichen kryptographischen Schlüssel (pk i) umfasst, wobei der öffentliche kryptographischen Schlüssel (pk 1) des ersten von der Schlüsselbereitstellungseinheit (2A) des Remote-Systems (3) bereitgestellten hashbasierten Schlüsselpaares (sk 1, pk 1) in einer vertrauenswürdigen Umgebung mindestens einem Gerät (3) des Übertragungssystems (1) bereitgestellt wird.

23. Computerprogrammprodukt mit gespeicherten Programmbefehlen zur Ausführung des Verfahrens nach einem der Ansprüche 1 bis 18.
